# EUROPEAN PATENT SPECIFICATION

(11) **EP 0 521 450 B1**
(45) Date of publication and mention of the grant of the patent: **04.09.1996**
(21) Application number: 92111035.9
(22) Date of filing: 30.06.1992
(51) Int. Cl.: B62D 7/15

(54) **Electric four-wheel steering system**
Elektrisches Vierradlenksystem
Système électrique de direction des quatre roues

(30) Priority: 01.07.1991 JP 185874/91; 12.07.1991 JP 197385/91; 17.07.1991 JP 201141/91; 12.07.1991 JP 62202/91 U
(43) Date of publication of application: 07.01.1993
(73) Proprietor: NSK LTD, Shinagawa-ku, Tokyo (JP)
(72) Inventor: Chikuma, Isamu, Maebashi-shi, Gunma-ken (JP); Eda, Hiroshi, Maebashi-shi, Gunma-ken (JP); Kanou, Hiroyuki, Maebashi-shi, Gunma-ken (JP); Ando, Nobuyashu, Takasaki-shi, Gunma-ken (JP); Kiyono, Kaoru, Takasaki-shi, Gunma-ken (JP)
(74) Representative: Grünecker, Kinkeldey, Stockmair & Schwanhäusser Anwaltssozietät

(56) References cited:
- EP-A- 0 292 567
- EP-A- 0 337 360
- EP-A- 0 475 742
- US-A- 4 741 409
- J. VOLMER: "GETRIEBETECHNIK LEITFADEN" Chapter 8: "Schraubengetriebe", pages 301-306, 1978, Vieweg, Braunschweig, DE

## Description

The present invention relates to an electric four-wheel steering system for an automobile that steers rear wheels as well as front wheels to change the route of an automobile.

Four-wheel steering systems have become popular in recent years. Thanks to the four-wheel steering system, the turning radius of an automobile can be reduced and running stability is improved at high speed.

From US-A-4 741 409 an electric four-wheel steering system for steering the wheels of an axis of a vehicle is known having two actuating units.

In US-A-4 741 409 each wheel is steered independently of the other wheels. The wheel output shaft comprises a pair of telescopic racks, one for each wheel while each rack is driven by an individual actuating unit comprising a motor and a spur or helical gear transmission with a forward and a reverse transmission efficiency above zero. The racks are engaged with each other to allow for limited axial displacement. If one motor fails to operate the relatively high gear ratio between the defective motor and the corresponding rack functions to initially hold the stationary rack in the position occupied at the time the defective motor is switched off. When failure of the respective motor occurs in a curve the wheel is held inclined relative to the straightforward direction.

In the known device the other motor is still able to move the second rack relative to the blocked steering rack. Because of the telescopic arrangement of the racks a lost motion occurs each time the direction of the vehicle is changed. Although lost motion is kept relatively small, such play can be quite dangerous under certain driving conditions when one wheel starts to flutter. In such a case the safety margin of the vehicle is significantly lower than that of a normal two wheel steered vehicle, and manoeuvrability will be restricted.

From EP-A-0 292 567 an electric rear wheel steering apparatus is known wherein a steering torque is transmitted via a worm reduction gear to the rear wheel output shaft of a vehicle. The worm reduction gear has a reverse transmission efficiency of zero or lower, i.e. partial self-locking properties. In case of abnormal operation the motor is cut off from the worm reduction gear. Because of the self-locking properties of the gearing the rear wheels remain in their actual position. Thus, if the motor breaks when the rear wheels are inclined to the straightforward direction it will be impossible to return the rear wheels to their neutral straightforward position immediately and in a controlled manner which is rather disadvantageous with regard to driving safety.

Another steering system is known fro EP-A2-0 337 360 showing a spring for returning the inclined wheels back to neutral position.

A steering system of similar type is also known from the applicant's JP-A1-4 118 377 which will be described as related background art in order to elucidate the problem underlying the present invention.

In Figures 5 and 6 the electric four-wheel steering system according to JP-A1-4 118 377 is shown wherein only when the running speed of a vehicle is relatively low, an electric motor is used to apply a steering angle to the rear wheels. When a route is changed during high-speed running, a steering angle is applied to the rear wheels according to a centrifugal force or using a so-called compliance steering mechanism.

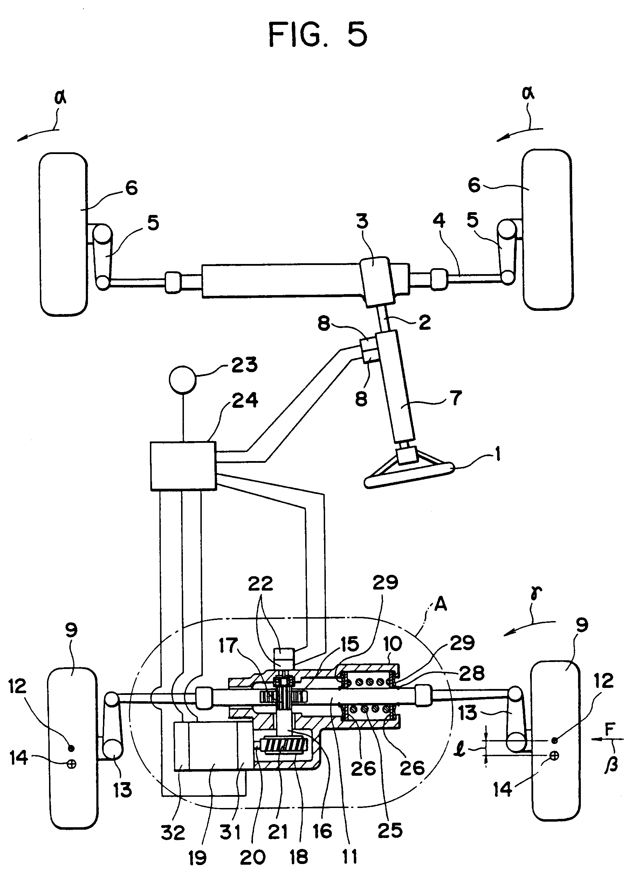

In the electric four-wheel steering system according to the previous invention, the movement of a steering wheel 1 in front of a driver's seat is transmitted to a steering gear 3 via a steering shaft 2. Then, a front wheel output shaft 4 is displaced in the axial direction (sideways in Figure 5). Then, an intended steering angle is applied to front wheels 6 via a pair of right and left knuckle arms 5 coupled to the ends of the front wheel output shaft 4.

A steering column 7 in which the steering shaft 2 lies is supporting steering angle sensors 8. Based on a rotation angle of the steering shaft 2 the steering angle sensors 8 sense, a steering angle applied to the front wheels 6 is detected. Two steering angle sensors, the steering angle sensors 8, are installed as a fail-safe precaution so that even when one of the steering angle sensors 8 fails, intended control can be passed.

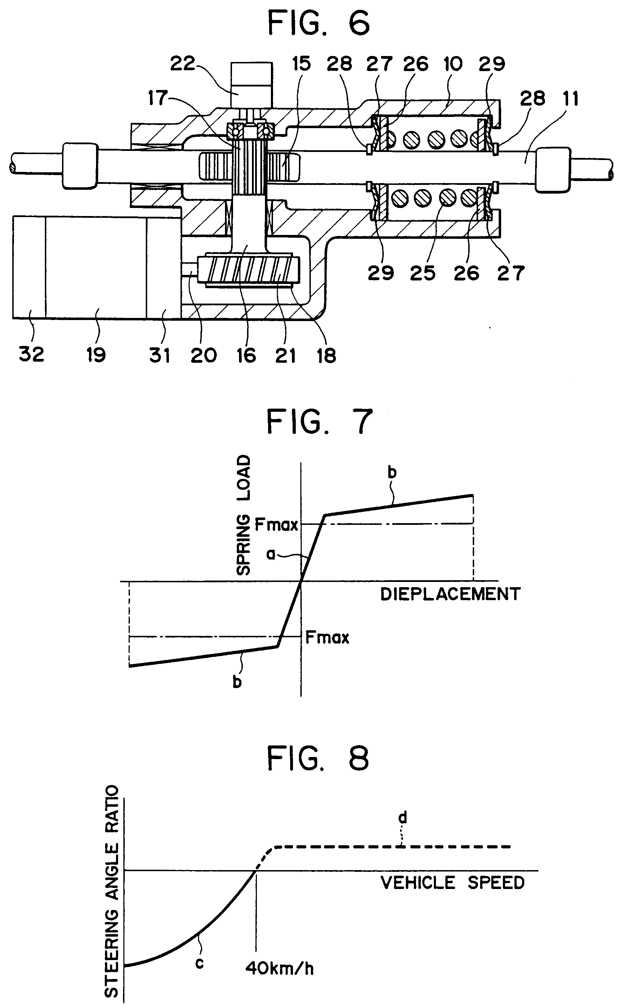

A housing 10 for storing a steering angle application mechanism for applying a steering angle to rear wheels 9 is resting on the floor of the back of a vehicle. Herein, the housing 10 cannot be displaced in the cross direction of the vehicle (sideways in Figure 5 or 6). In the housing 10, a rear wheel output shaft 11 runs laterally (in the cross direction of the vehicle). The rear wheel output shaft 11 moves in the axial direction (sideways in Figure 5 or 6) to apply a steering angle to the rear wheels 9. The right and left ends of the rear wheel output shaft 11 and the rear wheels 9 are joined using knuckle arms 13.

When the rear wheel output shaft 11 moves in the axial direction, the rear wheels 9 swivel with steering centers 14 as centers. Thus, a steering angle associated with a quantity of displacement of the rear wheel output shaft 11 is applied to the rear wheels 9. The steering centers 14 of the rear wheels 9 are separated by a distance ℓ from points of application of force 12 of the rear wheels 9 (centers of contact surfaces between the bottoms of tires and the ground) backward (lower part of Figure 5) in the advancing direction of the vehicle (up in Figure 5).

On the other hand, a rack 15 is formed on the central portion of the rear wheel output shaft 11 that is encased in the housing 10. In the central area of the housing 10, a transmission axis 16 is held to rotate freely at a skew position with respect to the rear wheel output shaft 11. A pinion 17 is fixed at one end of the transmission axis 16 (upper part of Figure 5 or 6), and engaged with the rack 15. A worm wheel 18 is fixed at the other end of the transmission axis 16 (bottom of Figure 5 or 6).

An output axis 20 is rotated via an electromagnetic clutch 31 by a rotation drive axis (not shown) of an electric motor 19 fixed on the outer surface of the housing 10. A worm 21 is mounted on the output axis 20, and engaged with the worm wheel 18. Thus, a reduction mechanism is formed. Thereby, when the output axis 20 rotates, the rear wheel output shaft 11 is displaced in the axial direction. Electric parts including the electric motor 19 are energized by a battery that is not shown.

The foregoing reduction mechanism has reversibility in the direction of transmitting power. With the rotation of the output axis 20, the rear wheel output shaft 11 is displaced in the axial direction. Then, with the displacement of the rear wheel output shaft 11, the output axis 20 is rotated. However, the reverse transmission efficiency of the reduction mechanism is suppressed low, so that when a steering angle applied to the rear wheels 9 must be retained intact, a load resulting from compression of a centering spring 25 will not be imposed on the electric motor 19 as it is. The electric motor 19 is provided with an encoder 32 for detecting the quantity of rotation of the electric motor 19. Then, the detected value is supplied to a control 24 to be described later.

At an end of the transmission axis 16, two displacement sensors 22 such as encoders or potentiometers are mounted to detect the quantity of displacement of the rear wheel output shaft 11 via the transmission axis 16. Detected signals sent from the two displacement sensors 22 are supplied to the control 24 for controlling power supply to the electric motor 19 together with detected signals sent from the steering angle sensors 8 and a detected signal sent from a speed sensor 23 for detecting a vehicle speed. Two displacement sensors, the displacement sensors 22, are provided as a fail-safe precaution.

The control 24 connects the electromagnetic clutch 31 only when the running speed of a vehicle the speed sensor 23 detects is less than a certain value (for example, 40 km/h). According to the signals sent from the steering angle sensors 8 and speed sensor 23, the control 24 allows the electric motor 19 to apply a steering angle to the rear wheels 9. At this time, power supply to the electric motor 19 is controlled based on the signal sent from the encoder 32. The displacement sensors 22 mounted at the end of the transmission axis 16 detect the steering angle actually applied to the rear wheels 9, then supply the detected value to the control 24.

The rear wheel output shaft 11 lies in the housing 10 fixed on a car body in such a manner that the rear wheel output shaft 11 can be displaced freely though slightly in the axial direction (sideways in Figure 5 or 6) and retain elasticity. More specifically, pedestals 26 are mounted to be paired at an interval on the central portion of the rear wheel output shaft 11, so that the rear wheel output shaft 11 can move freely in the axial direction. In the space enclosed with the inner surfaces of the pedestals 26, a centering spring 25 is installed. The centering spring 25 is elastic enough to return the rear wheel output shaft 11 to the neutral position in the event of breakdown of the electric motor 19.

The inner circumferential surface of the housing 10 is stepped to form steps 27 to be paired at an interval. The outer surfaces of the paired pedestals 26 on the sides of their outer circumferences are opposed to the steps 27. Paired stop rings 28 are mounted on the outer circumferential surface of the central portion of the rear wheel output shaft 11 to enclose the pair of pedestals 26. The pair of stop rings 28 restrict the movements of the pedestals along the rear wheel output shaft 11. Furthermore, disk springs 29 are placed between the outer surfaces of the paired stop rings 28, and the steps 27 and stop rings 28.

An elasticity required for crushing the disk springs 29 completely is designed to be smaller than that required for compressing the centering spring 25. When the rear wheel output shaft 11 is displaced with respect to the housing 10 according to a straight line a in Figure 7, the disk springs 29 are displaced (crushed). After either of the disk springs (located on the distal side in the displacing direction) crushes completely, the centering spring 25 starts compressing between the pair of pedestals 26 in such a manner as indicated with a straight line b in Figure 7. However, a spring load occurring when the disk springs 29 compress fully is designed to be a bit larger than a maximum lateral load F_{MAX} that is presumably applied to the rear wheel output shaft 11 according to a centrifugal force occurring in the presumed operation state.

In an electric four-wheel steering system of the previous invention having the aforesaid configuration, when a vehicle runs at a lower speed than a certain speed (for example, 40 km/h), a control 24 controls power supply to an electric motor 19 according to the signals sent from steering angle sensors 8 and a speed sensor 23, and applies an intended steering angle to rear wheels 9 if necessary. At this time, an electromagnetic clutch 31 is energized to remain connected.

To be more specific, when a vehicle runs at a low or medium speed, a steering angle that is 180° out-of-phase with that of front wheels 6 is applied to rear wheels 9 in order to improve turning efficiency of the vehicle. The steering angle applied to the rear wheels 9 is made smaller as the speed increases as indicated with a solid line c in Figure 8. In this case, the steering angle applied to the rear wheels 9 is detected by displacement sensors 22 installed at one end of a transmission axis 16. The detected values are supplied to a control 24. Using the two displacement sensors 22, a fail-safe precaution is attained.

The steering angle ratio whose values are plotted on the y axis in Figure 8 represents a ratio of the steering angle ^{R} to be applied to rear wheels to the steering angle θF (θR/θF). A larger absolute value results in a larger steering angle applied to the rear wheels. In a state represented as a domain above the x axis, the steering angle of front wheels is in phase with that of rear wheels. In a state represented as a domain below the x axis, the steering angle of front wheels is 180° out-of-phase with that of rear wheels.

On the other hand, when a vehicle runs at a speed exceeding the certain speed (40 km/h), the electromagnetic clutch 31 is de-energized and thus disconnected. Thereby, despite what signals are sent from the steering angle sensors 8 and speed sensor 23, the control 24 will not control the steering angle of the rear wheels 9. The electric motor 19 may also be de-energized if necessary.

Thus, when a vehicle runs at a speed exceeding a certain speed, if the route is changed, a steering angle in phase with that of front wheels 6 is applied to rear wheels according to a centrifugal force. Thus, the vehicle remains stable even when the route is changed.

For example, when the front wheels 6 are displaced in the arrow α direction with the manipulation of a steering wheel 1, a centrifugal force occurring when the route of a vehicle is changed causes the rear wheels 9 to swing rightward. The friction between the rear wheels and the road produces a lateral force F indicated with an arrow β in Figure 5 that is applied to the rear wheels 9. The force F is applied to a contact surface between the rear wheels 9 and the road or a vertical surface containing points of application of force 12 of the rear wheels 9. On the other hand, steering centers 14 of the rear wheels 9 are separated by a distance ℓ from the points of application of force 12 backward in the advancing direction of the vehicle. Therefore, the rear wheels 9 are steered in the arrow γ direction of Figure 5 with a moment of F by ℓ.

When the rear wheels 9 are thus steered in the arrow γ direction, a rear wheel output shaft 11 moves in the axial direction to compress one of disk springs 29 (left disk spring in Figure 5 or 6). Therefore, a steering angle to be applied to the rear wheels 9 is held at a value at which a force applied in the axial direction of the rear wheel output shaft 11 according to the lateral force F is balanced with a force applied to the rear wheel output shaft 11 with compression of the disk spring 29.

Therefore, when the vehicle speed exceeds a certain value, a steering angle to be applied to the rear wheels 9 is, as indicated with a dashed line d in Figure 8, in phase with that of the front wheels 6. In this case, the degree of a steering angle applied to the rear wheels 9 depends on the quantity of a lateral force F applied to the rear wheels 9 according to a centrifugal force occurring when the vehicle changes the route, but has no direct relation (has large indirect relation, though) to the vehicle speed or the degree of a steering angle applied to the front wheels 6.

A quantity of compressing disk springs 29 is limited. Therefore, an excess steering angle will not be applied to rear wheels 9. Thus, when a vehicle is running at a high speed, an electric motor 19 never applies a steering angle to the rear wheels 9. Only a physical force results in applying a steering angle to the rear wheels 9. Only a simple mechanism is required to de-energize an electromagnetic clutch 31 and the electric motor 19 when the vehicle speed exceeds a certain value. The mechanism can be designed to provide satisfactory reliability. Moreover, a fail-safe operation included in the mechanism will be very simple and highly reliable.

When an electric four-wheel steering system as described above is incorporated in an automobile, the points below have to be considered.

The centering spring incorporated as a fail-safe precaution has a large elasticity that causes a rear wheel output shaft 11 to return to the neutral position, even if an electric motor 19 breaks down. Therefore, the electric motor 19 must produce a large force to displace the rear wheel output shaft 11 even during normal operation. This results in increases in the size of the electric motor 19 and in current consumption.

Further when the electric motor 19 runs abnormally (rotates abruptly) for some reason such as a short circuit, the rear wheel output shaft 11 moves while compressing the centering spring 25, and thus applies a steering angle to rear wheels 9. In reality, displacement sensors 22 detect abnormal displacement, then a control 24 de-energizes the electric motor 19 by cutting off the power supply. An excess steering angle that may put a driver in jeopardy will not be applied to the rear wheels 9. However, an unfavorable steering angle may be applied to the rear wheels 9 for a very short period of time, though, before the electric motor 19 stops.

In designing an electric four-wheel steering system, efforts must be made to enable rear wheels to return to their neutral positions (i.e when no steering angle is applied to the rear wheels) in case of failure or breakdown, to reassure the same driving performance as an automobile in which a normal two-wheel steering system is incorporated. JP-A1-61-163064 proposes a structure in which if an abnormality occurs in any component of a four-wheel steering system, an electric motor operates to return rear wheels to their neutral positions.

The above description is based on an electric four-wheel steering system in which a motor-driven actuator is employed to apply a steering angle to rear wheels. A hydraulic four-wheel steering system in which a hydraulic actuator is used to apply a steering angle to rear wheels has the same drawbacks. That is to say, unless a centering spring is incorporated, when a hydraulic circuit fails, a steering angle applied to the rear wheels cannot be canceled. The incorporation of the centering spring, however, causes an instantaneous time lag in applying a steering angle to rear wheels.

The technical problem underlying the present invention is to provide an electrical four-wheel steering system having a high safety margin in the event of failure of electrical components, comparable to a normal two-wheel steered vehicle, also being compact in size, low in energy consumption and reacting promptly upon failure of one of its components without using a centring spring.

According to the present invention this problem is solved by an electric four-wheel steering system according to claim 1 wherein said rear wheel output shaft sections are rigidly connected and are forming a single integer rear wheel output shaft, and wherein the forward transmission efficiency of each speed reducing gearing from the motor to the rear wheel output shaft is higher than its reverse transmission efficiency. Moreover, there is provided a method for steering the rear wheels of a vehicle by the aforementioned inventive steering system.

If in an electric four-wheel steering system according to the present invention a steering angle is applied to rear wheels, a control will energize first and second electric motors, allow the first and second electric motors to displace the rear wheel output shaft in the axial direction via first and second speed reducers, and thus apply a steering angle to the rear wheels.

When a steering angle is applied to the rear wheels, if any of the electric motors fails, the other electric motor is used to return the rear wheel output shaft to the neutral position. Thus, the steering angle applied to the rear wheels can be canceled. Furthermore, a centering spring need not be incorporated in the rear wheel output shaft. Alternatively, a centering spring with weak elasticity will do. The first and second electric motors need not provide very large outputs.

Even if any of the electric motors runs abnormally, the rear wheel output shaft will not be displaced abruptly. More specifically, even if any of the electric motors runs abnormally, as far as other electric motor is operating normally, a speed reducer having low reverse transmission efficiency will not cause the rear wheel output shaft to move. Consequently, the rear wheel output shaft will not apply a steering angle to the rear wheels abruptly.

In the electric four-wheel steering system of the present invention, two motor-driven actuating units are incorporated. Only when both motor-driven actuating units operate similarly, a steering angle is applied to the rear wheels.

If any of the motor-driven actuating units runs abnormally because of a short circuit on a power supply circuit for supplying power to the motor-driven actuating units or an unpreventable failure in a control, as far as the other motor-driven actuator is operating normally, the rear wheel output shaft will not move. This results in improved safety.

According to a preferred embodiment the four-wheel steering system of the present invention further comprises first and second unidirectional clutching mechanisms whose permissible displacement directions are reverse, first and second canceling mechanisms for deactivating the first and second unidirectional clutching mechanisms, and a control for controlling the actuators, and the first and second canceling mechanisms.

The first unidirectional clutching mechanism is placed between the rear wheel output shaft and stationary section. When the rear wheel output shaft deviates in one direction from the neutral position, the first unidirectional clutching mechanism allows the rear wheel output shaft to move towards the neutral position but hinders it from moving in one direction from the neutral position. The first canceling mechanism deactivates the first unidirectional clutching mechanism to allow the rear wheel output shaft to move freely.

The second unidirectional clutching mechanism is placed between the rear wheel output shaft and stationary section. When the rear wheel output shaft deviates in the other direction from the neutral position, the second unidirectional clutching mechanism allows the rear wheel output shaft to move towards the neutral position but hinders it from moving in the other direction from the neutral position. Then, the second canceling mechanism deactivates the second unidirectional clutching mechanism to allow the rear wheel output shaft to move freely.

The control activates the first and second canceling mechanisms during normal operation so that the first and second clutching mechanisms will not hinder displacement of the rear wheel output shaft. When something abnormal occurs, the control deactivates the first and second canceling mechanisms so that the first and second unidirectional clutching mechanisms will restrict displacement of the rear wheel output shaft.

In the four-wheel steering system of the present invention having the foregoing configuration, when a steering angle is applied to the rear wheels, the control activates the first and second canceling mechanisms but deactivates the first and second unidirectional clutching mechanisms. As a result, the rear wheel output shaft can move freely within a whole stroke without being hindered the first and second unidirectional clutching mechanisms.

In the above state, when the control energizes the actuator and displaces the rear wheel output shaft in the axial direction according to the running state of a vehicle, an appropriate steering angle is applied to the rear wheels.

If any component fails, when the actuator that applies a steering angle to the rear wheels during normal operation fails to resolve the steering angle applied to the rear wheels, the control deactivates the first and second canceling mechanisms and activates the first and second unidirectional clutching mechanisms.

When the first and second unidirectional clutching mechanisms are activated, the rear wheel output shaft can move freely towards the neutral position. More specifically, when the rear wheel output shaft deviates in one direction from the neutral position, the first unidirectional clutching mechanism operates to allow the rear wheel output shaft to move only towards the neutral position. Then, moving in the other direction beyond the neutral position is hindered by the second unidirectional clutching mechanism. When the rear wheel output shaft deviates in the other direction from the neural position, the second unidirectional clutching mechanism operates to allow the rear wheel output shaft to move only towards the neutral position. Then, moving in one direction beyond the neutral position is hindered by the first unidirectional clutching mechanism.

When the rear wheel output shaft deviates in either direction, the first and second unidirectional clutching mechanisms allow the rear wheel output shaft to move towards the neutral position. Therefore, if failure occurs, a steering angle applied to rear wheels is canceled and the rear wheels are put in a state in which no steering angle is applied. Further embodiments of the invention are laid down in the subclaims and will be described below in conjunction with the drawings wherein
Figure 1 is a plan view of a main section showing the first embodiment of the present invention;
Figure 2 is a plan view of a main section showing the second embodiment of the present invention;
Figure 3 is a plan view of a main section showing the third embodiment of the present invention;
Figure 4 is a plan view of a main section showing an accessory used in forming an electric four-wheel steering system of the present invention;
Figure 5 is a cross-sectional plan view of part of an electric four-wheel steering system of prior art;
Figure 6 is an enlarged diagram of a second A of Figure 5;
Figure 7 shows the relationship between the quantity of displacement in the axial direction of a rear wheel output shaft and the spring load applied in the axial direction of the rear wheel output shaft;
Figure 8 shows the relationship between the vehicle speed and steering angle ratio;

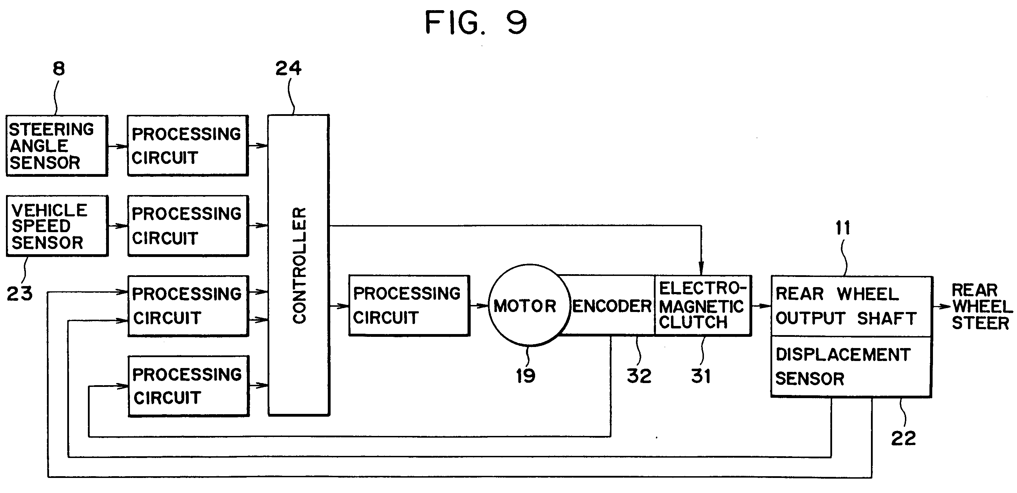

Figure 9 is a block diagram showing a control circuit of the electric four-wheel steering system of prior art;
Figure 10 is a block diagram showing a control circuit in other embodiment of the present invention;
Figure 11 is a plan view of a main section showing an example of a specific configuration of a section to which a steering angle is applied;
Figure 12 is a block diagram showing a control circuit in other embodiment of the present invention;
Figure 13 is a flowchart showing an example of the operations of an electric four-wheel steering system of the present invention;
Figure 14 shows the first example of the relationship between the voltage of a battery and the steering angle limit;
Figure 15 shows the second example of the relationship between the voltage of a battery and the steering angle limit;
Figure 16 is a plan view of a main section showing an embodiment of the present invention in a state in which a steering angle is not applied to rear wheels;
Figure 17 is an enlarged diagram of a section A of Figure 16;
Figure 18 is an enlarged diagram of the section A in a state in which a steering angle is applied to the rear wheels; and
Figure 19 is an enlarged diagram of the section A in a state in which the rear wheels are returned to their neutral positions when failure occurs.

### DESCRIPTION OF THE PREFERRED EMBODIMENTS

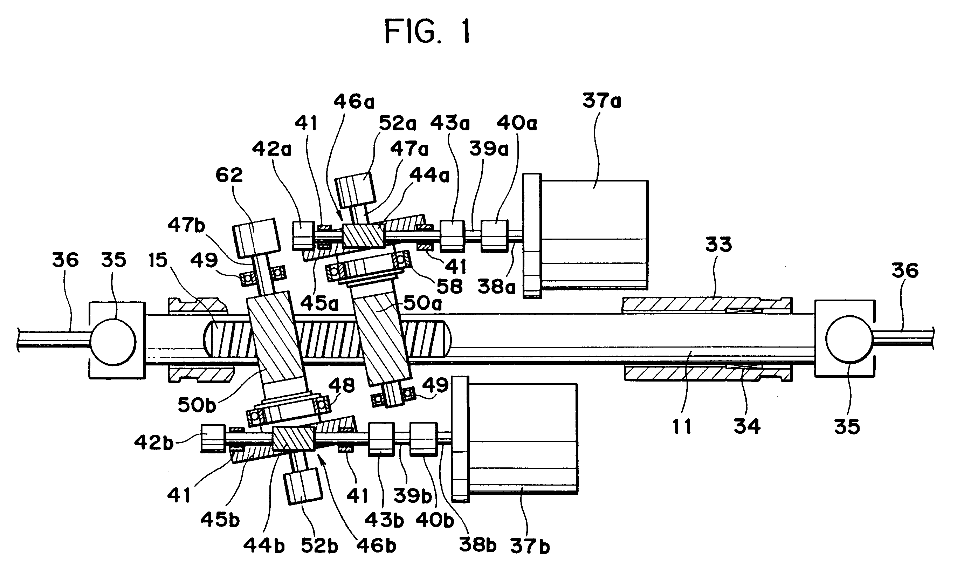

Figure 1 shows an embodiment of the present invention. In a cylindrical case 33 resting on the floor of an automobile, a rear wheel output shaft 11 lies with a sliding bearing 34 involved so that the rear wheel output shaft 11 can move freely in the axial direction (sideways in Figure 1). Ends of coupling rods 36 are connected to the ends of the rear wheel output shaft 11 via universal joints 35. The other ends of the coupling rods 36 are connected to the distal ends of rear wheel steering knuckles. Thus, with displacement of the rear wheel output shaft 11, a steering angle associated with the quantity of displacement is applied to right and left rear wheels.

By the sides of the case 33, a first electric motor 37a and a second electric motor 37b are stationed in such a manner that the output axes 38a and 38b of the electric motors 37a and 37b will be in parallel with the center axis of the case 33. At the distal ends of the output axes 38a and 38b, transmission axes 39a and 39b are joined via electromagnetic clutches 40a and 40b. When the electromagnetic clutches 40a and 40b are connected, the transmission axes 39a and 39b rotate together with the output axes 38a and 38b.

The transmission axes 39a and 39b are supported by pairs of bearings 41 so that the transmission axes 39a and 39b can rotate freely. The ends of the transmission axes 39a and 39b are, as described above, connected to the output axes 38a and 38b via the electromagnetic clutches 40a and 40b. The other ends of the transmission axes 39a and 39b are connected to encoders 42a and 42b, so that the rotation angles of the transmission axes 39a and 39b can be detected.

On the central portions of the transmission axes 39a and 39b, brakes 43a and 43b, and worms 44a and 44b are installed in series in that order from the electromagnetic clutches 40a and 40b. The worms 44a and 44b are engaged with worm wheels 45a and 45b to be described later, thus forming first and second speed reducers 46a and 46b.

On the other hand, on the outer circumferential surface of the central portion of the rear wheel output shaft 11, a rack 15 is created as part of the rear wheel output shaft 11. In the vicinity of the rear wheel output shaft 11, first and second rotation axes 47a and 47b are located at skew positions with respect to the rear wheel output shaft 11 and supported by bearings 48 and 49 so that the first and second rotation axes 47a and 47b can rotate freely. Pinions 50a and 50b formed on the outer circumferential surfaces of the distal portions of the first and second rotation axes 47a and 47b are engaged with the rack 15.

The worm wheels 45a and 45b resting on the proximal portions of the first and second rotation axes 47a and 47b are engaged with the worms 44a and 44b, thus forming the first and second speed reducers 46a and 46b. The proximal ends of the first and second rotation axes 47a and 47b are provided with encoders 52a and 52b. The distal end of the second rotation axis 47b is provided with an encoder 62. Thus, the rotation angles of the first and second rotation axes 47a and 47b are monitored to detect a quantity of displacement of the rear wheel output shaft 11. Three encoders; that is, the encoders 52a, 52b, and 62 are provided so that even if any of the encoders fails, the rear wheel output shaft 11 can be reset to the neutral position according to the signals sent from the remaining two encoders.

As described above, the first and second speed reducers 46a and 46b are made up of the worms 44a and 44b, and the worm wheels 45a and 45b respectively. Herein, reverse transmission efficiency or efficiency in transmitting the movement of the rear wheel output shaft 11 to the first and second electric motors 37a and 37b is lower than forward transmission efficiency or efficiency in transmitting the rotations of the first and second electric motors 37a and 37b to the rear wheel output shaft 11.

A control that is not shown controls the first and second electric motors 37a and 37b, electromagnetic clutches 40a and 40b, and brakes 43a and 43b, and allows the first and second electric motors 37a and 37b to displace the rear wheel output shaft 11 in the axial direction.

When an electric four-wheel steering system of the present invention having the aforesaid configuration is used to apply a steering angle to rear wheels, a control connects electromagnetic 40a and 40b, releases brakes 43a and 43b (sets a non-braking state), and energizes first and second electric motors 37a and 37b.

When the first and second electric motors 37a and 37b conduct, a rear wheel output shaft 11 is displaced in the axial direction via output axes 38a and 38b, transmission axes 38a and 38b, worms 44a and 44b, first and second rotation axes 47a and 47b, pinions 50a and 50b, and a rack 15. Then, with the displacement of the rear wheel output shaft 11, coupling rods 36 are pushed and pulled to apply a steering angle to rear wheels.

When the steering angle is applied to the rear wheels, if either the electric motor 37a or 37b fails, the control uses the other electric motor 37b or 37a to return the rear wheel output shaft 11 to the neutral position and thus cancels the steering angle applied to the rear wheels. At this time, the electromagnetic clutch 40a or 40b connected to the electric motor 37a or 37b is disconnected if necessary, so that the other electric motor 37b or 37a will rotate smoothly (so that the faulty electric motor 37a or 37b will not interfere with rotation).

The first and second speed reducers 46a and 46b are characteristic of low reverse transmission efficiencies. Therefore, when either the electric motor 37a or 37b fails, if either the rotation axis 47a or 47b does not rotate, the other electric motor 37b or 37a uses a little force to return the rear wheel output shaft 11 to the neutral position. Unless the electric motor 37a or 37b fails to rotate because of burning, even when the electromagnetic clutch 40a or 40b remains connected, the rear wheel output shaft 11 can be returned to the neutral position. Supposing the electric motor 37a or 37b fails to rotate because of burning, the rear wheel output shaft 11 can be returned to the neutral position by disconnecting the electromagnetic clutch 40a or 40b.

A rear wheel output shaft 11 forming an electric four-wheel steering system of the present invention need not have a centering spring 25 (Figures 5 and 6) or may have a centering spring 25 with weak elasticity. Therefore, when the rear wheel output shaft 11 is displaced to apply a steering angle to rear wheels in a normal state, such a large force that overcomes a large elasticity of the centering spring 25 is not required. Therefore, first and second electric motors 37a and 37b for steering rear wheels need not provide very large outputs. When a vehicle runs rectilinearly, if the rear wheel output shaft 11 must be held at the neutral position, brakes 43a and 43b are actuated to hinder rotation of transmission axes 39a and 39b.

As described previously, reverse transmission efficiencies of first and second speed reducers 46a and 46b are suppressed low. Therefore, only when the first and second electric motors 37a and 37b operate similarly (rotate to displace the rear wheel output shaft 11 by the same quantity in the same direction), the rear wheel output shaft 11 moves in the axial direction. Therefore, even if either the electric motor 37a or 37b runs abnormally, the rear wheel output shaft 11 will not move abruptly.

To be more specific, even if either the electric motor 37a or 37b runs abnormally, as far as the other electric motor 37b or 37a operates normally, the speed reducer 46b or 46a characteristic of low reverse efficiency will not cause the worm 44b or 44a of the other electric motor 37b or 37a to rotate. Therefore, the rear wheel output shaft 11 will not move. Consequently, the rear wheel output shaft 11 will not apply a steering angle to rear wheels abruptly.

The control monitors the output signals of encoders 42a, 42b, 52a, 52b, and 62 all the time. If an abnormal steering angle is likely to be applied to the rear wheels, the rear wheel output shaft 11 is reset to the neutral position right away. Then, the electromagnetic clutches 40a and 40b are disconnected, and the brakes 43a and 43b are actuated (to set the braking state). In this state, a steering angle will never be applied to the rear wheels. The automobile can be steered in the same manner as an auto in which a normal two-wheel steering system is incorporated. The encoders 52a, 52b, and 62 are used to detect a smaller quantity of rotation than the encoders 42a and 42b. The encoders 52a, 52b, and 62 may, therefore, be replaced by potentiometers or other displacement sensors.

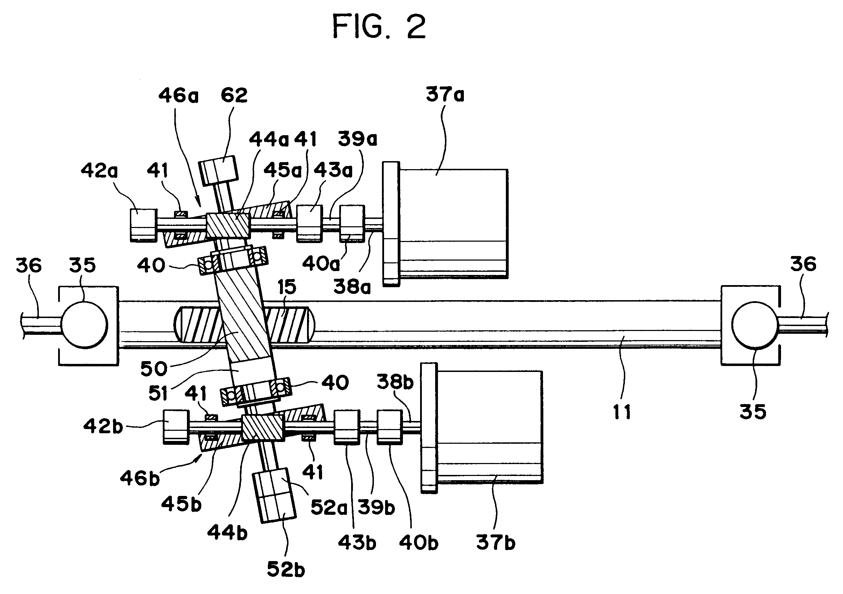

Figure 2 shows the second embodiment of the present invention. The aforesaid first embodiment employs two rotation axes of a first rotation axis 47a and a second rotation axis 47b to form first and second speed reducers 46a and 46b. In this embodiment, worm wheels 45a and 45b are fixed at the ends of a single rotation axis 51 that are supported by bearings 48 to rotate freely. A pinion 50 formed in the central portion of the rotation axis 51 is engaged with a rack 14 formed on a rear wheel output shaft 11. Thus, the rear wheel output shaft 11 is displaced in the axial direction with the rotation of the rotation axis 51. Encoders 52a, 52b, and 62 for detecting a quantity of displacement of the rear wheel output shaft 11 are mounted at the ends of the rotation axis 51. Other components and operations are identical to those in the aforesaid first embodiment.

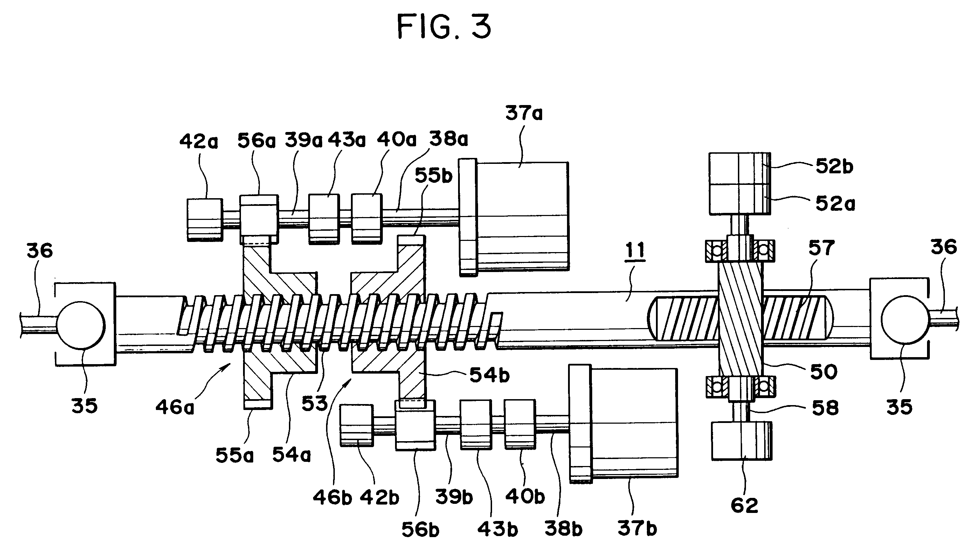

Next, Figure 3 shows the third embodiment of the present invention. The first or second embodiment employs worms 44a and 44b, and worm wheels 45a and 45b to form first and second speed reducers 46a and 46b of low reverse transmission efficiencies. In this embodiment, a square thread 53 formed on the outer circumferential surface of the central portion of the rear wheel output shaft 11 is used in combination with a pair of nuts 54a and 54b to form first and second speed reducers 46a and 46b of low reverse transmission efficiencies.

The nuts 54a and 54b are held at the positions shown in Figure 3 by supports, which are not shown, so that they can rotate freely (but cannot move in the axial direction). Slave gears 55a and 55b formed on the outer circumferential surfaces of the ends of the nuts 54a and 54b are engaged with drive gears 56a and 56b resting on transmission axes 39a and 39b. A pinion of a pinion shaft 58 is engaged with a rack 57 formed on the outer circumferential surface of the central portion of the rear wheel output shaft 11. Encoders 52a, 52b, and 62 are mounted at the ends of the pinion shaft 58 to detect a quantity of displacement of the rear wheel output shaft 11 in the axial direction. Other components and their operations are identical to those in the aforesaid first and second embodiments.

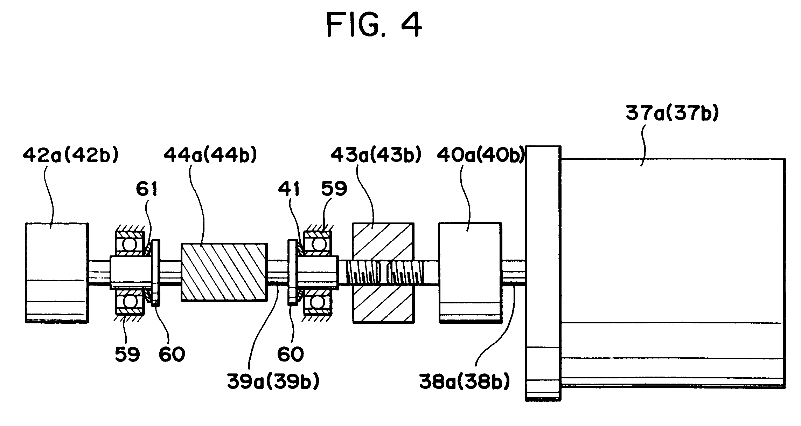

Figure 4 shows an accessory for use in forming an electric four-wheel steering system of the present invention. In the electric four-wheel steering system of the present invention, first and second electric motors 37a and 37b are rotated in a synchronous manner during normal operation. Unless the motors 37a and 37b are precisely synchronous, worms 44a and 44b and worm wheels 45a and 45b, or a square thread 53 and nuts 54a and 54b, which form first and second speed reducers 46a and 46b, rub strongly or bite at worst. As a result, the rear wheel output shaft 11 may not move smoothly. These problems are solved, needless to say, by synchronizing the first and second motors 37a and 37b precisely. This however, requires high-precision motors 37a and 37b, and a high-precision control circuit. Consequently, manufacturing cost of an electric four-wheel steering system increases.

As shown in Figure 4, either a transmission axis 39a or 39b on which a worm 44a or 44b is fixed is elastically displaced freely in the axial direction. Thereby, when the rotations of the first and second electric motors 37a and 37b disagree even slightly, the transmission axis 39a or 39b moves in the axial direction to absorb the disagreement.

More specifically, guards 60 are formed between the ends of the worm 44a or 44b and bearings 59. Disk springs or other elastic materials 61 are slightly and elastically pressed between the guards 60 and bearings 59. Thereby, the transmission axis 39a or 39b can minutely though elastically move in the axial direction. When the rotations of the first and second electric motors 37a and 37b disagree, the transmission axis 39a or 39b moves in the axial direction to absorb the disagreement. Thus, a rear wheel output shaft 11 can be displaced smoothly in the axial direction.

An electric four-wheel steering system of the present invention can apply to any structure in which a rear wheel output shaft is displaced in the axial direction by energizing an electric motor, and thus a steering angle is applied to rear wheels. In other words, an electric four-wheel steering system to which the present invention can apply, unlike the aforesaid electric four-wheel steering system of prior art, need not have a built-in compliance steering mechanism.

An electric four-wheel steering system of the present invention is configured and operates as described previously. Therefore, compact and low-output electric motors can be employed as electric motors for the electric four-wheel steering system. This minimizes manufacturing cost, permits freer selection of locations of installing electric motors, and eventually simplifies the design of an electric four-wheel steering system.

If an electric motor runs abnormally, it is reliably prevented that a steering angle is applied to rear wheels abruptly. Thus, high safety is ensured.

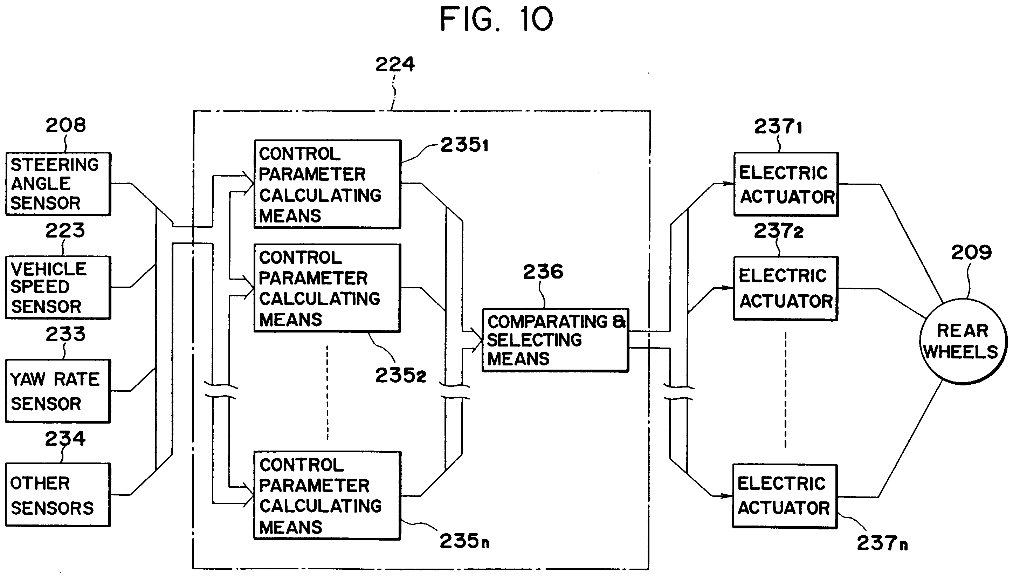

Figure 10 shows other embodiment of the present invention. A steering angle sensor 208, a vehicle speed sensor 223, a yaw rate sensor 233, and other sensors 234 detect a degree of a steering angle applied to front wheels, a running speed of a vehicle, a yaw rate, and other factors that affect the degree of a steering angle. The detected signals sent from these sensors are supplied to multiple control parameter calculating means 235₁ to 235ₙ (n is 2 or a larger natural number).

The multiple control parameter calculating means 235₁ to 235ₙ are arranged in parallel and form a control 224 together with a comparing and selecting means 236 to be described later. The multiple control parameter calculating means 235₁ to 235ₙ receive the detected signals from the multiple sensors 203, 223, 233, and 234, calculate steering angles to be applied to rear wheels 209 using the detected signals, then supply control signals according to the calculated steering angles. The control signals sent from the control parameter calculating means 235₁ to 235ₙ are supplied to the comparing and selecting means 236.

The comparing and selecting means 236 compares the control signals sent from the control parameter calculating means 235₁ to 235ₙ. Only when the control signals the control parameter calculating means 235₁ to 235ₙ provide have equal values, the comparing and selecting means 236 sends the control signals to multiple motor-driven actuators 237₁ to 237ₘ (m is 2 or a larger natural number). Then, the motor-driven actuators 237₁ to 237ₘ apply a steering angle according to the control signals.

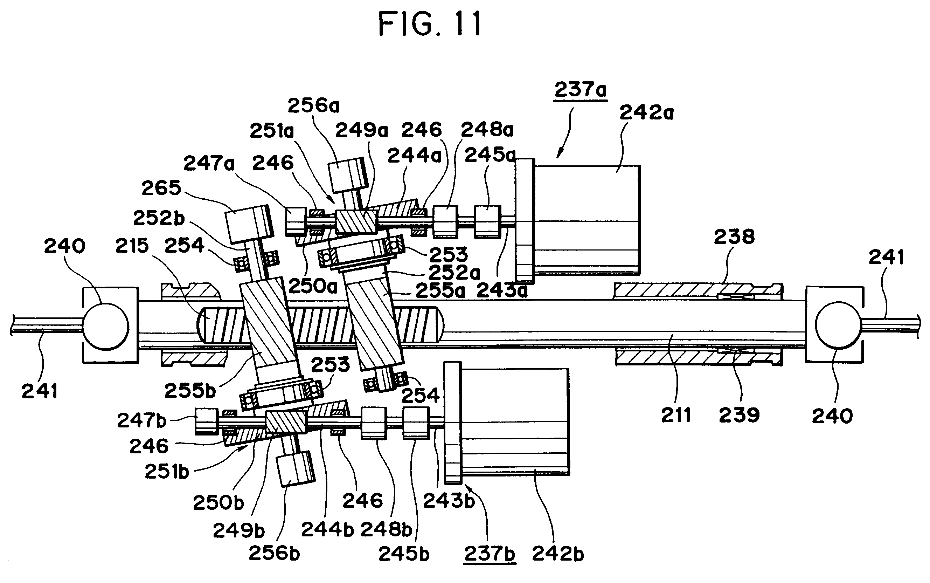

Only when all of the multiple motor-driven actuators 237₁ to 237ₘ operate similarly, a steering angle is applied to the rear wheels 209. The multiple motor-driven actuators 237₁ to 237ₘ are constructed, for example, as shown in Figure 11.

Figure 11 shows motor-driven actuators specified with m = 2 in the motor-driven actuators 237₁ to 237ₘ; that is, first and second motor-driven actuators 237a and 237b. An embodiment of the present invention will be described using a specific example shown in Figure 11. In a cylindrical case 238 resting on the floor of an automobile, a rear wheel output shaft 211 lies with sliding bearings 239 involved so that it can move freely in the axial direction (sideways in Figure 11). Ends of coupling rods 241 are joined with the ends of the rear wheel output shaft 211 via universal joints 240. The other ends of the coupling rods 241 are joined with distal ends of rear wheel steering knuckle arms 13 (See Figure 5). Thereby, with displacement of the rear wheel output shaft 211, a steering angle associated with the quantity of displacement is applied to right and left rear wheels.

By the sides of the case 238, a first electric motor 242a forming the first motor-driven actuator 237a and a second electric motor 242b forming the second motor-driven actuator 237b are stationed in such a manner that the output axes 243a and 243b of the electric motors 242a and 242b will be in parallel with the center axis of the case 238. In the distal portions of the output axes 243a and 243b, transmission axes 244a and 244b are joined via electromagnetic clutches 245a and 245b. When the electromagnetic clutches 245a and 245b are connected, the transmission axes 244a and 244b rotate together with the output axes 243a and 243b.

The transmission axes 244a and 244b are supported by pairs of bearings 246 so that they can rotate freely. The ends of the transmission axes 244a and 244b are connected to the output axes 243a and 243b via the electromagnetic clutches 245a and 245b. Encoders 247a and 247b are mounted at the other ends of the transmission axes 243a and 243b to detect the rotation angles of the electric motors 242a and 242b.

On the central portions of the transmission axes 244a and 244b, brakes 248a and 248b, and worms 249a and 249b are mounted in series in that order from the electromagnetic clutches 245a and 245b. The worms 249a and 249b engage with worm wheels 250a and 250b to be described later, thus forming first and second speed reducers 251a and 251b.

On the other hand, a rack 215 is formed on the outer circumferential surface of the central portion of the rear wheel output shaft 211 as part of the rear wheel output shaft 211. In the vicinity of the rear wheel output shaft 211, first and second rotation axes 252a and 252b are located at skew positions with respect to the rear wheel output shaft 211 and supported by bearings 253 and bearings 254 so that the first and second rotation axes 252a and 252b can rotate freely. Pinions 255a and 255b formed on the outer circumferential surfaces of the distal portions of the first and second rotation axes 252a and 252b are engaged with the rack 215. The worm wheels 250a and 250b fixed on the proximal portions of the first and second rotation axes 252a and 252b are engaged with the worms 249a and 249b to form first and second speed reducers 251a and 251b.

Encoders 256a and 256b are mounted at the proximal ends of the first and second rotation axes 252a and 252b, and an encoder 265 is mounted at the distal end of the second rotation axis 252b. The rotation angles of the first and second rotation axes 252a and 252b are monitored to detect a steering angle to be applied to the rear wheels 209. The encoders 256a, 256b, and 265 serve as rear wheel steering angle sensors. The rotation angles of the first and second rotation axes 252a and 252b are not very large. Therefore, the encoders 256a, 256b, and 265 may be replaced by potentiometers. The rotation angles of the rotation axes 252a and 252b may be detected using the potentiometers, or the displacement of the rear wheel output shaft 211 may be detected directly using the potentiometers.

As described above, the first and second speed reducers 251a and 251b are made up of the worms 249a and 249b, and the worm wheels 250a and 250b. In the first and second speed reducers 251a and 251b, reverse transmission efficiency or efficiency in transmitting the movement of the rear wheel output shaft 211 to the first and second rotation axes 252a and 252b is lower than forward transmission efficiency or efficiency in transmitting the rotations of the first and second rotation axes 252a and 252b to the rear wheel output shaft 211.

Then, as shown in Figure 10, a control 224 having multiple control parameter calculating means 235₁ to 235ₙ (herein, n = 2 because two control parameter calculating means 235₁ and 235₂ are required to control the apparatus shown in Figure 11) controls the first and second rotation axes 252a and 252b, electromagnetic clutches 245a and 245b, and brakes 238a and 238b, then allows the rotation axes 252a and 252b to displace the rear wheel output shaft 211 in the axial direction.

When an electric four-wheel steering system of the present invention having the foregoing configuration is used to apply a steering angle to rear wheels, two control parameter calculating means 235₁ and 235₂ are incorporated. A comparing and selecting means 236 compares the control signals sent from the control parameter calculating means 235₁ and 235₂. Only when the control signals sent from the control parameter calculating means 235₁ and 235₂ have equal values, the control signals are sent to the first and second electric motors 242a and 242b forming the first and second motor-driven actuators 237a and 237b. Then, a steering angle is applied to rear wheel 209.

Therefore, if either the control parameter calculating means 235₁ or 235₂ fails, the comparing and selecting means 236 sends no control signal to the first and second electric motors 242a and 242b. Therefore, even if either the control parameter calculating means 235₁ or 235₂ fails, the motor-driven actuators 237a and 237b formed with the first and second electric motors 242a and 242b are prevented from running abnormally. Therefore, the rear wheel output shaft 211 will not be displaced abruptly. Consequently, a steering angle will not be applied to the rear wheels 209 abruptly. Incorporation of three or more control parameter calculating means will further improve safety.

In an example shown in Figure 11, if either a motor-driven actuator 237a or 237b runs abnormally because of a short circuit on a power circuit for supplying power to the first and second motor-driven actuators 237a and 237b or other unpreventable failure in a control 242 (if either a first or second electric motor 242a or 242b rotates abruptly), as far as the other motor-driven actuator 237b or 237a operates normally, a rear wheel output shaft 211 for applying a steering angle to rear wheels 209 will not move. Thus, safety is further improved.

In an electric four-wheel steering system in which a rear wheel steering mechanism shown in Figure 11 is incorporated, when the system operates normally (does not fail), a control 224 connects electromagnetic clutches 245a and 245b, releases brakes 248a and 248b (puts the system in non-braking state), then energizes first and second electric motors 242a and 242b.

When the first and second electric motors 242a and 242b conduct, the rear wheel output shaft 211 is displaced in the axial direction via output axes 243a and 243b, worms 249a and 249b, first and second rotation axes 252a and 252b, pinions 255a and 255b, and a rack 215. Then, with the displacement of the rear wheel output shaft 211, coupling rods 241 are pushed and pulled to eventually apply a steering angle to the rear wheels 209.

When a steering angle is applied to the rear wheels 209, if either the electric motor 242a or 242b fails, the control 224 uses the other electric motor 242b or 242a to return the rear wheel output shaft 211 to the neutral position, thus cancels the steering angle applied to the rear wheels 209a. At this time, the electromagnetic clutch 245a or 245b of either the electric motor 242a or 242b is disconnected if necessary so that the other electric motor 242a or 242b will rotate smoothly (the faulty electric motor 242a or 242b will not interfere with the rotation of the other motor).

The first and second speed reducers are characteristic of low reverse transmission efficiencies. Therefore, if either the electric motor 242a or 242b fails, when either the rotation axis 252a or 252b does not rotate, the other electric motor 242b or 242a uses a little force to return the rear wheel output shaft 211 the neutral position. Unless the electric motor 242a or 242b fails to rotate because of, for example, burning, even when the electromagnetic clutch 245a or 245b remain connected, the rear wheel output shaft 211 can be returned to the neutral position. Supposing the electric motor 242a or 242b fails to rotate because of burning, the rear wheel output shaft 211 can be returned to the neutral position by disconnecting the electromagnetic clutch 245a or 245b.

Therefore, a centering spring 25 (Figures 5 and 6) used in the previous invention need not be incorporated in the rear wheel output shaft 211 forming an electric four-wheel steering system of the present invention shown in Figure 11. Alternatively, a centering spring 25 with weak elasticity will do. Therefore, when the rear wheel output shaft 211 is displaced to apply a steering angle to the rear wheels 209 in a normal state, a large force that overcomes a large elasticity of the centering spring 25 is unnecessary. This means that the first and second electric motors 252a and 242b for steering rear wheels need not provide very large outputs. When a vehicle runs rectilinearly, if the rear wheel output shaft 11 must be held at the neutral position, the brakes 248a and 248b are actuated to interfere with rotation of the transmission axes 244a and 244b.

As described previously, reverse transmission efficiencies of first and second speed reducers 251a and 251b are suppressed low. Only when the first and second electric motors 242a and 242b operate similarly (rotate to displace a rear wheel output shaft 211 by the same quantity in the same direction), the rear wheel output shaft 211 moves in the axial direction. Even if either an electric motor 242a or 242b runs abnormally, the rear wheel output shaft 211 will not move abruptly.

More specifically, if either the electric motor 242a or 242b runs abnormally, as far as the other electric motor 242b or 242a operates normally, a speed reducer 251b or 251a of low reverse transmission efficiency will not cause the worm 249b or 249a of the other electric motor 242b or 242a to rotate. Therefore, the rear wheel output shaft 211 will not move to apply a steering angle to rear wheels 209 abruptly.

As described previously, in an electric four-wheel steering system of the present invention, if an abnormal steering angle may be applied to rear wheels, a control 224 and motor-driven actuators 237a and 237b return a rear wheel output shaft 211 to the neutral position. Then, electromagnetic clutches 245a and 245b are disconnected, and brakes 248a and 248b are actuated (the system is put in a braking state). In this state, a steering angle is never applied to the rear wheels 209. The automobile can be steered in the same manner as an auto having a normal two-wheel steering system.

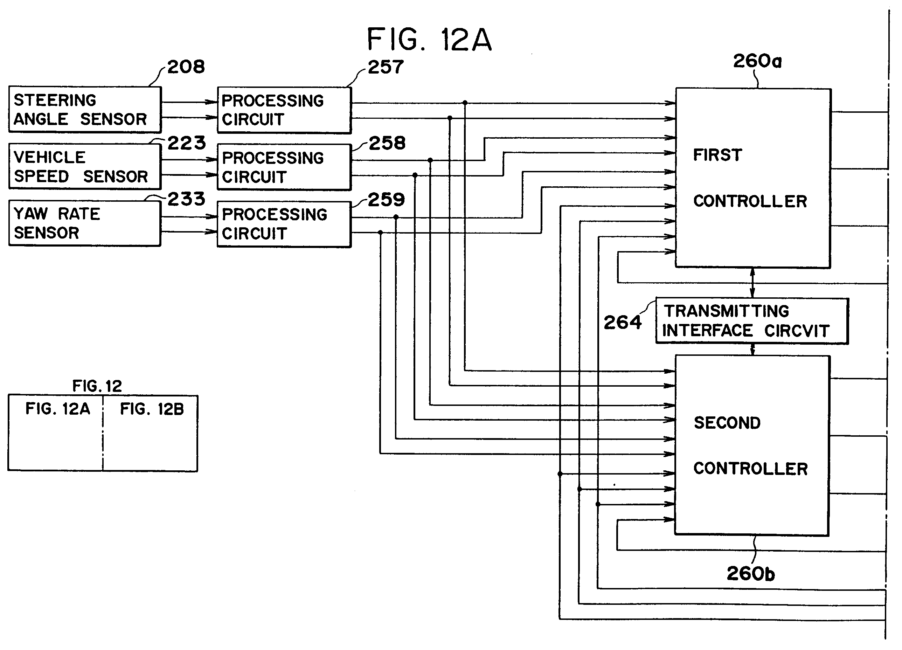

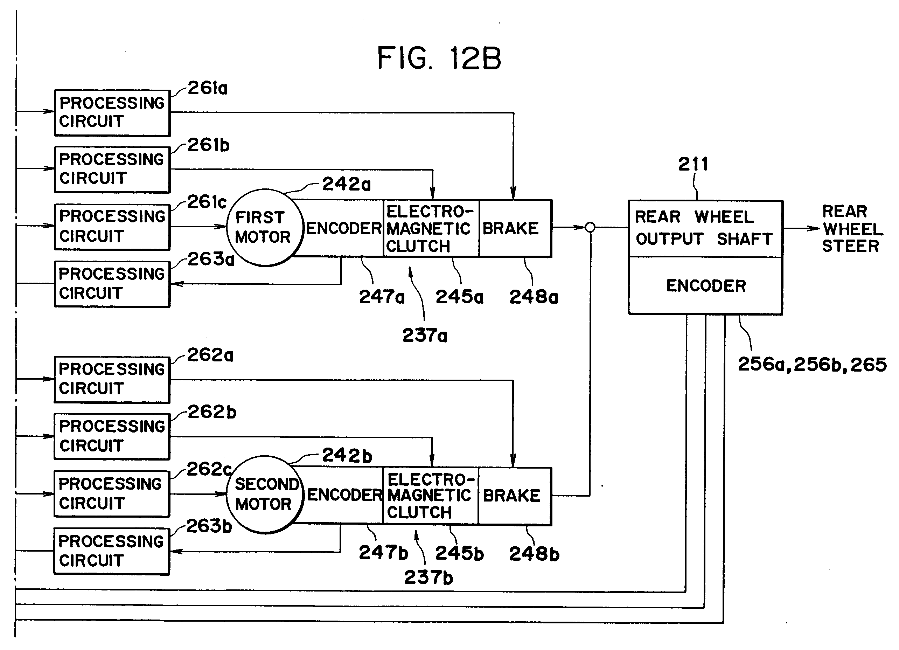

Figure 12 shows other embodiment of the present invention. Two units of steering angle sensors 208, vehicle speed sensors 223, and yaw rate sensors 233 respectively are installed to detect a steering angle applied to front wheels, a vehicle speed, and a yaw rate, which are factors affecting the degree of a steering angle to be applied to rear wheels. These factors are processed in parallel by processing circuits 257, 258, and 259, then supplied to first and second controllers (CPUs) 260a and 260b.

The first and second controllers 260a and 260b use the processing circuits 261a to 261c, and 262a to 262c to control first and second electric motors 242a and 242b, electromagnetic clutches 245a and 245b, and brakes 248a and 248b, which are combined, for example, as shown in Figure 11, and thus displace a rear wheel output shaft 211 in the axial direction. The first controller 260a inputs the detected signal of an encoder 247a for detecting a rotation angle of the first electric motor 242a via a processing circuit 263a. The second controller 260a inputs the detected signal of an encoder 247b for detecting a rotation angle of the second electric motor 242b via a processing circuit 263b. Outputs of encoders 247a and 247b are used as feedback signals. Thus, the first and second electric motors 242a and 242b are rotated by a predetermined angle.

Encoders 256a, 256b, and 265 are incorporated in the structure of Figure 11 to detect a quantity of displacement of the rear wheel output shaft 211 via the first and second rotation axes 252a and 252b. The outputs of the encoders 256a, 256b, and 265 are supplied to the first and second controllers 260a and 260b. These three encoders 256a, 256b, and 265 are rear wheel steering angle sensors for detecting a steering angle applied to the rear wheels. The first and second controllers 260a and 260b are provided with signals sent from three systems of rear wheel steering sensors for detecting a steering angle applied to the rear wheels.

A communication interface circuit 264 is installed between the first and second controllers 260a and 260b. The communication interface circuit 264 detects disagreement between the control signals the first and second controllers 260a and 260b send to the first and second electric motors 242a and 242b.

In an electric four-wheel steering system of the present invention having the foregoing configuration, if any of components fails, first and second controllers 260a and 260b use the other system of the component that does not fail to return a rear wheel output shaft 211 to the neutral position, and thus resolve a steering angle applied to rear wheels.

For example, in Figure 11, if either a first or second electric motor 242a or 242b fail, the first and second controllers 260a and 260b disconnect an electromagnetic clutch for the faulty electric motor, use the other electric motor that does not fail, and thus return the rear wheel output shaft 211 to the neutral position. Therefore, the electric four-wheel steering system of the present invention, unlike the aforesaid structure of prior art, need not have a centering spring 25 having a large elasticity.

When any of encoders 247a, 247b, 256a, 256b, and 265, or either a sensor 223 or 233 fails, the control signals sent from the first and second controllers 260a and 260b disagree. The disagreement is detected by a communication interface circuit 264. In this case, according to signals sent from a total of three systems of rear wheel steering angle sensors for detecting a rear wheel steering angle the encoders 256a, 256b, and 265 provide, the first and/or second electric motors 242a and/or 242b are/is used to return the rear wheel output shaft 211 to the neutral position. Thus, the steering angle applied to the rear wheels is canceled.

If one of three systems of rear wheel steering angle sensors fails, as far as two systems operate normally, a steering angle applied to rear wheels can be canceled. That is to say, if two systems of rear wheel steering angle sensors are installed, if either of the rear wheel steering angle sensors fails, it cannot be determined which sensor (encoder) is abnormal or normal. In this embodiment, since three systems of rear wheel steering angle sensors are installed, a faulty sensor can be identified.

In an electric four-wheel steering system of the present invention, first and second electric motors 242a and 242b are controlled independently by first and second controllers 260a and 260b. Therefore, while a vehicle is running, checking if the electric motors 242a and 242b are locked because of burning can be done in parallel with controlling a steering angle to be applied to rear wheels. To be more specific, while one electric motor is controlling a steering angle, the other electric motor is disconnected from the electromagnetic clutch, energized, then inspected. In this case, unlike the structure shown in Figure 11, encoders 247a and 247b are mounted on the output axes 243a and 243b of the electric motors 242a and 242b beyond the electromagnetic clutches 245a and 245b. Alternatively, special inspection encoders may be installed.

An electric four-wheel steering system of the present invention can apply to any structure in which a rear wheel output shaft is displaced in the axial direction by energizing an electric motor. In other words, an electric four-wheel steering system to which the present invention can apply, unlike the aforesaid electric four-wheel steering system of prior art, need not have a built-in compliance steering mechanism.

An electric four-wheel steering system of the present invention is configured and operates as described previously. Abrupt application of a steering angle to rear wheels can be prevented reliably. Thus, high safety can be ensured.

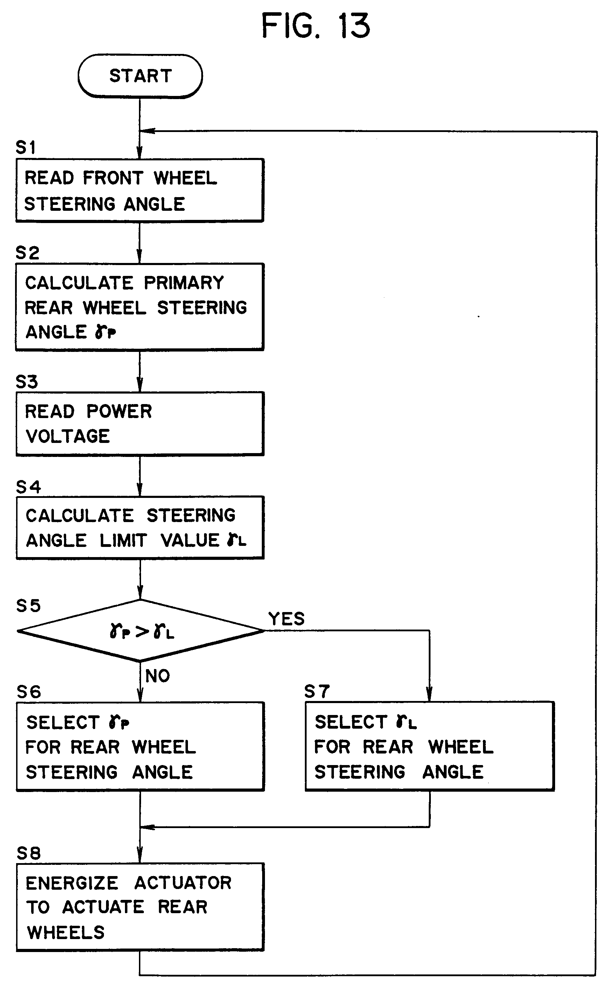

Figure 13 shows an example of a control state in which an electric four-wheel steering system of the present invention applies a steering angle to rear wheels. The electric four-wheel steering system of the present invention uses a voltmeter or other supply voltage detecting means, which is not shown, to detect the voltage of a battery that is not shown. Then, the detected signal the supply voltage detecting means provides is supplied to a control 25 (Figure 5).

The control 25 makes determination and provides instructions as shown in Figure 13, and thus applies a steering angle to rear wheels 9 (Figure 5) according to a variation in vehicle speed.

First, at a step S1, the control 25 reads signals sent from front wheel steering angle sensors 8. Then, when the control 25 determines based on the signals that the voltage of the battery is sufficient, the control 25 calculates a steering angle to be applied to the rear wheels 9 (primary rear wheel steering angle) at a step S2. At a step S3, the control 25 reads a detected signal sent from the supply voltage detecting means. At a step S4, a maximum γ_{L} (steering angle limit) of a steering angle applicable to the rear wheels is calculated using the detected signal. More specifically, at the step S4, a load applicable to the battery is estimated according to the current voltage of the battery, then the steering angle limit is calculated. The steering angle limit is determined in the range in which even if a steering angle of a limit value is applied to the rear wheels, the capability of the battery will not be impaired.

As described above, the primary rear wheel steering angle is calculated at the step S2, and the steering angle limit is calculated at the step S4. (Herein, the primary rear wheel steering angle γ_{P} and steering angle limit γ_{L} may be calculated by reversing the order.) Then, at a step S5, it is determined which value is larger, the primary rear wheel steering angle or the steering angle limit. Then, a steering angle of the smaller value is applied to the rear wheels.

If the primary rear wheel steering angle value is smaller than the steering angle limit value, the primary rear wheel steering angle value is adopted as a steering angle to be applied to the rear wheels at a step S6 in Figure 13. If the steering angle limit value is smaller than the primary rear wheel steering angle value, the steering angle limit value is adopted as a steering angle applied to the rear wheels at a step S7.

At a step S8, a motor-driven actuator is energized. A steering angle of the primary rear wheel angle value or steering angle limit value adopted at the step S6 or S7 is applied to the rear wheels.

Based on the signals sent from a pulse generator incorporated in the control 25, the operations of the steps S1 to S8 are repeated at regular intervals (at intervals of one second or less) while a vehicle is running.

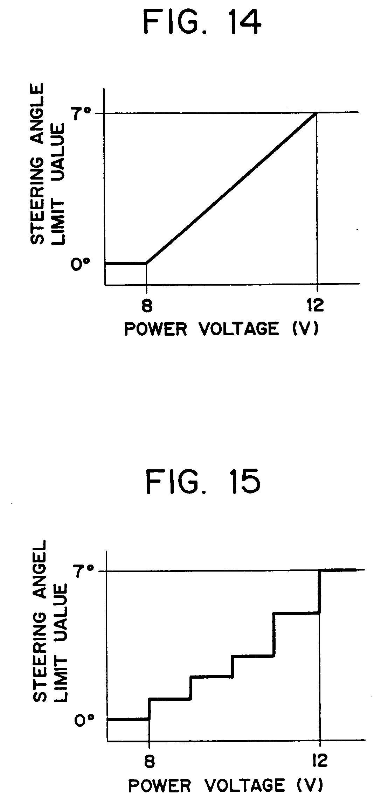

Figures 14 and 15 show the relationship between the voltage of a battery and the steering angle limit. At the step S4 in Figure 13, the steering angle limit is calculated according to the relationship shown in Figure 14 or 15. Then, the calculated value is passed to the step S5 in Figure 13. As shown in Figures 14 and 15, assuming that the voltage of a battery is 12 V, the function of the battery will not be impaired by energizing a motor-driven actuator. A maximum steering angle applicable to the rear wheels (7° in Figures 14 and 15) is adopted as the steering angle limit. When the voltage of a battery is 8 V or less; the function of the battery may be impaired by energizing the motor-driven actuator. Then, the steering angle limit is set to zero, so that a steering angle will not be applied to the rear wheels. When the voltage of a battery ranges 8 to 12 V, the steering angle limit is changed continuously (in Figure 14) or in steps (in Figure 15) according to the voltage of the battery.

An electric four-wheel steering system of the present invention can apply to any structure in which a steering angle is applied to rear wheels by energizing an electric motor. In other words, an electric four-wheel steering system to which the present invention can apply, unlike the aforesaid electric four-wheel steering system of the previous invention, need not have a built-in compliance steering mechanism.

An electric four-wheel steering system of the present invention is configured and operates as described above. A battery will, therefore, not be exhausted to interfere with smooth movement of a vehicle or to leave rear wheels with a steering angle applied.

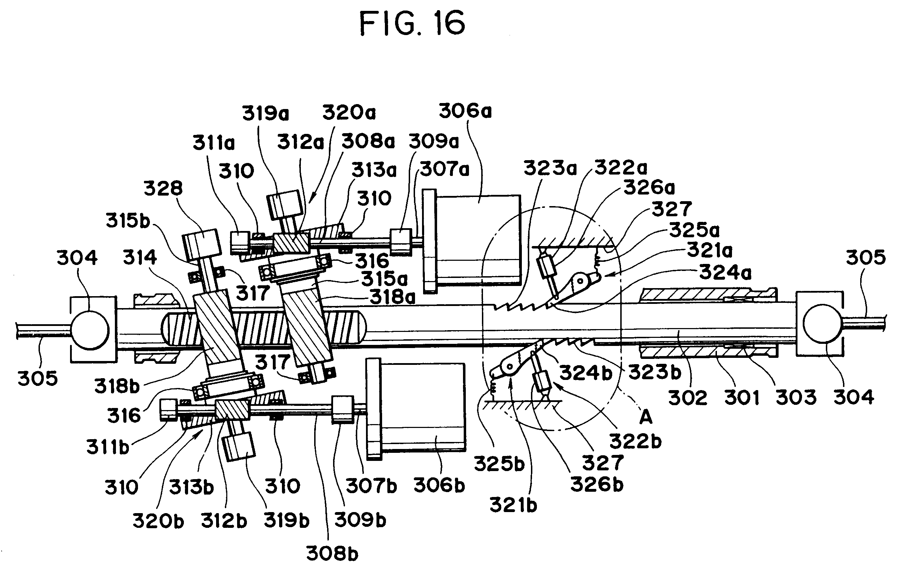

Figures 16 to 19 show an embodiment in which the present invention applies to an electric four-wheel steering system. In a cylindrical case 301 resting on the floor of an automobile, a rear wheel output shaft 302 lies with sliding bearings 303 involved so that it can move freely in the axial direction (sideways in Figure 16). Ends of coupling rods 305 are joined with the ends of the rear wheel output shaft 302 via universal joints 304. The other ends of the coupling rods 305 are joined with distal ends of rear wheel steering knuckles. Thus, with displacement of the rear wheel output shaft 302, a steering angle associated with the quantity of displacement can be applied to the right and left rear wheels.

By the sides of the case 301, a first electric motor 306a and a second electric motor 306b that form motor-driven actuators for displacing the rear wheel output shaft 302 in the axial direction are stationed in such a manner that the output axes 307a and 307b of the electric motors 306a and 306b will be in parallel with the center axis of the case 301. Transmission axes 308a and 308b are joined with the distal ends of the output axes 307a and 307b via electromagnetic clutches 309a and 309b. Thus, when the electromagnetic clutches 309a and 309b are connected, the transmission axes 308a and 308b rotate together with the output axes 307a and 307b.

The transmission axes 308a and 308b are supported by pairs of bearings 310. The ends of the transmission axes 308a and 308b are, as described previously, connected to the output axes 307a and 307b via the electromagnetic clutches 309a and 309b. The other ends of the transmission axes 308a and 308b are provided with encoders 311 and 311b, thus permitting detection of the rotation angles of the transmission axes 308a and 308b.

In the central portions of the transmission axes 308a and 308b, worms 312a and 312b are formed. The worms 312a and 312b are engaged with worm wheels 313a and 313b to be described later.

On the other hand, a rack 14 is formed on the outer circumferential surface of the central portion of the rear wheel output shaft 302 as part of the rear wheel output shaft 302. In the vicinity of the rear wheel output shaft 302, first and second rotation axes 315a and 315b are located at skew positions with respect to the rear wheel output shaft 302 and supported by bearings 316 and 317 so that the first and second rotation axes 315a and 315b can rotate freely. Pinions 318a and 318b formed on the outer circumferential surfaces of the distal portions of the first and second rotation axes 315a and 315b are engaged with the rack 314.

Worm wheels 313a and 313b resting on the proximal portions of the first and second rotation axes 315a and 315b are engaged with the worms 312a and 312b, thus forming first and second speed reducers 320a and 320b. Encoders 319a and 319b are mounted at the proximal ends of the first and second rotation axes 315a and 315b, and an encoder 328 is mounted at the distal end of the second rotation axis 315b. Thus, the rotation angles of the first and second rotation axes 315a and 315b are monitored to detect a quantity of displacement of the rear wheel output shaft 302, and quantities of rotation of the first and second electric motors 306a and 306b. Three encoders; that is, the encoders 319a, 319b, and 328 are installed, so that even if any of the encoders fails, the rear wheel output shaft 302 can be reset to the neutral position according to the signals sent from the remaining two encoders. The quantities of rotation of the rotation axes 315a and 315b are relatively small. Therefore, the encoders 319a, 319b, and 328 may be replaced by potentiometers. Then, using the potentiometers, a quantity of displacement of the rear wheel output shaft 302 may be metered via the rotation axes 315a and 315b or directly.

In first and second speed reducers 320a and 320b made up of the worms 312a and 312b, and worm wheels 313a and 313b as described above, reverse transmission efficiency or efficiency in transmitting the movement of the rear wheel output shaft 302 to the first and second electric motors 306a and 306b is lower than forward transmission efficiency or efficiency in transmitting the rotations of the first and second electric motors 306a and 306b to the rear wheel output shaft 302.

Mounted on the sides of the central portion of the rear wheel output shaft 302 are first and second unidirectional clutching mechanisms 321a and 321b, and first and second canceling mechanisms 322a and 322b for deactivating the first and second unidirectional clutching mechanisms 321a and 321b.

In the embodiment of Figure 16, the first and second unidirectional clutching mechanisms 321a and 321b comprise ratchet gears 323a and 323b that are formed on the margins of the central portion of the rear wheel output shaft 302 and oriented reversely, ratchet pawls 324a and 324b that can be disengaged from the ratchet gears 323a and 323b, and springs 325a and 325b for pressing the distal portions of the ratchet pawls 324a and 324b towards the ratchet gears 323a and 323b. The first and second canceling mechanisms 322a and 322b are formed with solenoids 326a and 326b. When the solenoids 326a and 326b are energized, the distal portions of the ratchet pawls 324a and 324b are departed from the ratchet gears 323a and 323b by resisting elasticities of the springs 325a and 325b.

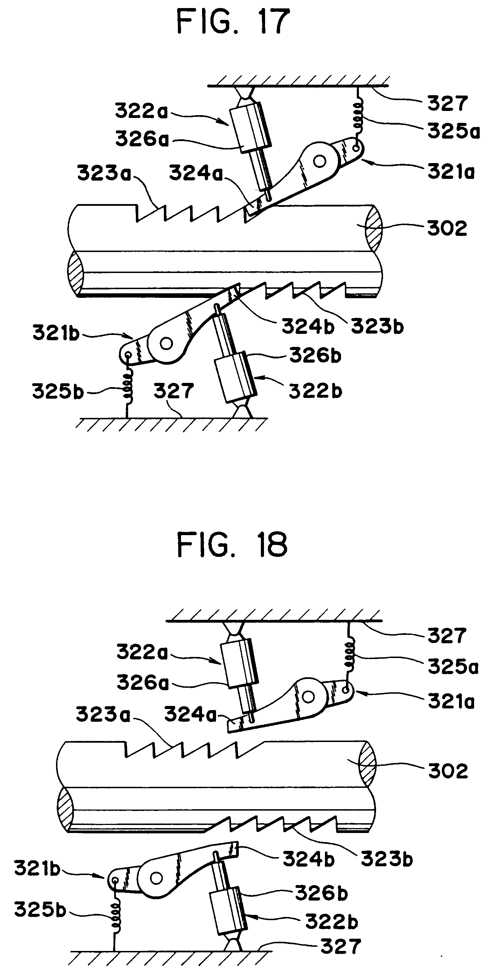

In the foregoing first and second unidirectional clutching mechanisms 321a and 321b, the ratchet gears 323a and 323b on the margins of the rear wheel output shaft 302 are oriented reversely and deviated in the axial direction of the rear wheel output shaft 302. As shown in Figures 16 and 17, the ratchet pawl 324a forming the first unidirectional clutching mechanism 321a engages with one end (right end in Figures 16 and 17) of the ratchet gear 323a to hinder the rear wheel output shaft 302 from moving in one direction (rightward in Figures 16 and 17). The ratchet pawl 324b forming the second unidirectional clutching mechanism 321b engages with the other end of the ratchet gear 323b (left end in Figures 16 and 17) to hinder the rear wheel output shaft 302 from moving in the other direction (leftward in Figures 16 and 17).

When the ratchet pawl 324a engages with one end of the ratchet gear 323a, if the ratchet pawl 324b engages with the other end of the ratchet gear 323b, the rear wheel output shaft 302 resides at the neutral position and a steering angle in either direction is not applied to the rear wheels. However, when the ratchet pawls 324a and 324b are arranged at mutually-deviated positions in the axial direction of the rear wheel output shaft 302, as far as the ratchet pawl 324a can engage with one end of the ratchet gear 323a and the ratchet pawl 324b can engage with the other end of the ratchet gear 323b at the same time, the ratchet gears 323a and 323b need not be formed at mutually-deviated positions in the axial direction.

The springs 325a and 325b are installed between the proximal ends of the ratchet pawls 324a and 324b and the stationary sections of a car body 327. Unless external forces work, the distal ends of the ratchet pawls 324a and 324b engage with the ratchet gears 323a and 323b. The solenoids 326a and 326b forming the first and second canceling mechanisms 322a and 322b are located between the stationary sections of the car body 327 and the distal portions of the ratchet pawls 324a and 324b. The solenoids 326a and 326b stretch in the non-conducting state (when the first and second canceling mechanisms 322a and 322b are deactivated). When conducting, the solenoids 326a and 326b contract their lengths. Therefore, when the solenoids 326a and 326b conduct (the first and second canceling mechanisms 322a and 322b are activated), the ratchet pawls 324a and 324b resist the elasticities of the springs 325a and 325b to swing. This disengages the distal ends of the ratchet pawls 324a and 324b from the ratchet gears 323a and 323b.

A control, which is not shown, controls the first and second electric motors 306a and 306b, electromagnetic clutches 309a and 309b, and solenoids 326a and 326b, then allows the first and second electric motors 306a and 306b to displace the rear wheel output shaft 302 in the axial direction. Thus, a steering angle is applied to the rear wheels.

When an electric four-wheel steering system of the present invention having the aforesaid configuration is used to apply a steering angle to rear wheels, a control connects electromagnetic clutches 309a and 309b, energizes solenoids 326a and 326b, then activates first and second canceling mechanisms 322a and 322b. Then, when the distal ends of ratchet pawls 324a and 324b are disengaged from ratchet gears 323a and 323b as shown in Figure 18, the control energizes first and second electric motors 306a and 306b.

When the first and second electric motors 306a and 306b conduct, a rear wheel output shaft 302 is displaced in the axial direction via output axes 307a and 307b, transmission axes 308a and 308b, worms 312a and 312b, first and second rotation axes 315a and 315b, pinions 318a and 318b, and a rack 314. Then, with the displacement of the rear wheel output shaft 302, coupling rods 305 are pushed and pulled to apply a steering angle to the rear wheels.

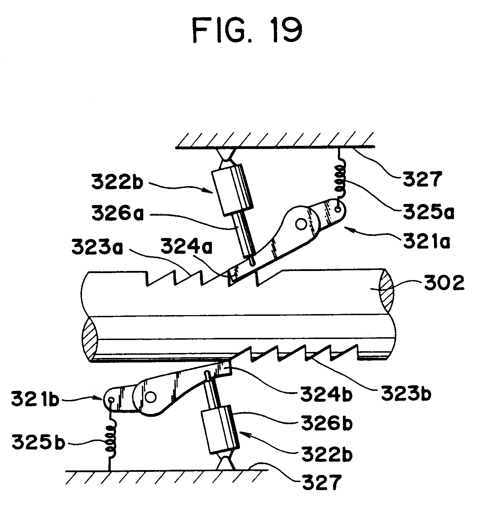

When the steering angle is applied to the rear wheels, if either the electric motor 306a or 306b fails, the control de-energizes the solenoids 326a and 326b and allows the solenoids 326a and 326b to stretch with the elasticities of springs 325a and 325b (deactivates the first and second canceling mechanisms 322a and 322b). As a result, the ratchet pawls 324a and 324b swing with the elasticities of the springs 325a and 325b. As shown in Figure 19, the distal ends of the ratchet pawls 324a and 324b can engage with the ratchet gears 323a and 323b.

When the distal ends of the ratchet pawls 324a and 324b can engage with the ratchet gears 323a and 323b, the rear wheel output shaft 302 can move only towards the neutral position. That is to say, when the rear wheel output shaft 302 is deviated in one direction (rightward in Figure 19) from the neutral position as shown in Figure 19, the ratchet gear 323a and ratchet pawl 324a engage to form the first unidirectional clutching mechanism 321a. Thereby, the rear wheel output shaft 302 can move only in the other direction (leftward in Figure 19) towards the neutral position. Then, when the rear wheel output shaft 302 is pushed in the other direction towards the neutral position, the rear wheel output shaft 302 returns to the neutral position.

A force for returning the rear wheel output shaft 302 to the neutral position can be produced, as described later, using either a first or second electric motor 306a or 306b forming a motor-driven actuator that does not fail. Alternatively, the arrangement of suspensions on rear wheels (suspension geometry) may be devised in such a manner that after a vehicle resumes running, the rear wheels will be reset to the rectilinear state (neutral positions). Thereby, even if either motor-driven actuator breaks down, the rear wheel output shaft 302 is moved towards the neutral position. A generally-known suspension geometry that is designed for resetting front wheels to the rectilinear state after a vehicle resumes running can be utilized as the suspension geometry for resetting rear wheels. The illustration and detailed description will be omitted.

When the rear wheel output shaft 302 is moved towards the neutral position as described above, as shown in Figures 16 and 17, paired ratchet pawls 324a and 324b engage with the ends of the ratchet gears 323a and 323b. Then, when the ratchet gear 323b and ratchet pawl 324b engage to form the second unidirectional clutching mechanism 321b, the rear wheel output shaft 302 is prevented from moving in the other direction beyond the neutral position.

When the rear wheel output shaft 302 deviates in the other direction beyond the neutral position, on the contrary to the above case, the rear wheel output shaft 302 is moved only in one direction towards the neutral position by the second unidirectional clutching mechanism 321b. However, the rear wheel output shaft 302 is hindered from moving in one direction beyond the neutral position by the first unidirectional clutching mechanism 321a.

Even if the rear wheel output shaft 302 deviates in either direction, the first and second unidirectional clutching mechanisms 321a and 321b allow the rear wheel output shaft 302 to move towards the neutral position. If failure occurs, therefore, a steering angle applied to rear wheels is canceled and the rear wheels are put in a state in which no steering angle is applied.

In the embodiment shown in Figure 16, either the first or second electric motor 306a or 306b forming a motor-driven actuator fails, the control uses the other electric motor 306b or 306a that does not fail to return the rear wheel output shaft 302 to the neutral position. Thus, a steering angle applied to the rear wheels is canceled. At this time, the electromagnetic clutch 309a or 309b of either the electric motor 306a or 306b is disconnected if necessary, so that the other electric motor 306b or 306a will rotate smoothly (the faulty electric motor 306a will not interfere with the rotation of the other electric motor).

The first and second speed reducers 320a and 320b are characteristic of low reverse transmission efficiencies. When either the electric motor 306a or 306b fails, if either the rotation axis 315a or 315b does not rotate, the other electric motor 306b or 306a uses a little force to return the rear wheel output axis 302 to the neutral position. Unless the electric motor 306a or 306b fails to rotate because of burning, even when the electromagnetic clutch 309a or 309b remains connected, the rear wheel output shaft 302 can be returned to the neutral position. Supposing the electric motor 306a or 306b fails to rotate because of burning, the rear wheel output shaft 302 can be returned to the neutral position by disconnecting the electromagnetic clutch 309a or 309b.

With the incorporation of the first and second unidirectional clutching mechanisms 321a and 321b, the rear wheel output shaft 302 forming a four-wheel steering system of the present invention need not have a centering spring for resetting the rear wheel output shaft 302 to the neutral position. Alternatively, a centering spring with weak elasticity will do. Therefore, when the rear wheel output shaft 302 is displaced to apply a steering angle in a normal state, a large force is unnecessary to overcome a large elasticity of a centering spring. This means that the first and second electric motors 306a and 306b need not provide very large outputs. When a vehicle is running rectilinearly, if the rear wheel output shaft 302 must be held at the neutral position, the first and second canceling mechanisms 322a and 322b are deactivated so that the ratchet pawls 324a and 324b will engage with the ends of the ratchet gears 323a and 323b. This hinders displacement of the rear wheel output shaft 302 in the axial direction.

In the embodiment in Figure 16, similarly to the previous embodiment, the reverse transmission efficiencies of the first and second speed reducers 320a and 320b are suppressed low. Only when the first and second electric motors 306a and 306b operate similarly (rotate to displace the rear wheel output shaft 302 by the same quantity in the same direction), the rear wheel output shaft 302 is displaced in the axial direction. Therefore, even if either the electric motor 306a or 306b runs abnormally, the rear wheel output shaft 302 will not be displaced abruptly.

To be more specific, either the electric motor 306a or 306b runs abnormally, as far as the other electric motor 306b or 306a operates normally, the speed reducer 320b or 320a of low transmission efficiency will not cause the worm 312b or 312a of the other electric motor 306b or 306a to rotate. Therefore, the rear wheel output shaft 302 will not move. Consequently, the rear wheel output shaft 302 will not apply a steering angle to the rear wheels abruptly.

The control always monitors the output signals of the encoders 311a, 311b, 319a, 319b, and 328. If an abnormal steering angle is likely to be applied to the rear wheels, the control resets the rear wheel output shaft 302 to the neutral position right away. Then, the control disconnects the electromagnetic clutches 309a and 309b, and de-energizes the solenoids 326a and 326b. As a result, the first and second unidirectional clutching mechanisms 321a and 321b engage as shown in Figures 16 and 17 to hold the rear wheel output shaft at the neutral position. No steering angle is applied to the rear wheels. Thus, the automobile can be steered in the same manner as an auto in which a normal two-wheel steering system is incorporated.

When the power supply of the four-wheel steering system fails, if both the first and second electric motors 306a and 306b fail to rotate, the solenoids 326a and 326b are deenergized. At this time, the rear wheels are, as described previously, moved towards their neutral positions due to the geometry of the suspensions mounted on the rear wheels. For smooth cancellation of a steering angle applied to the rear wheels, it is preferred that the electromagnetic clutches 309a and 309b placed between the output axes 307a and 307b and the transmission axes 308a and 308b be connected only in a conducting state.

In the aforesaid embodiment, an electric four-wheel steering system uses motor-driven actuators to apply a steering angle to rear wheels. The present invention can apply to a hydraulic four-wheel steering system in which hydraulic actuators are employed to apply a steering angle to rear wheels.

A four-wheel steering system of the present invention is configured and operates as described above. Therefore, if failure occurs, a steering angle applied to rear wheels can be canceled reliably. Furthermore, compact and low-output actuators can be employed as components of the four-wheel steering system. Therefore, manufacturing cost can be minimized, locations of installing actuators can be selected more freely, and thus a four-wheel steering system can be designed more simply.

Even if an actuator runs abnormally, it is reliably prevented that a steering angle is applied to rear wheels abruptly. Thus, high safety is ensured.

## Claims

1. An electric four-wheel steering system comprising:
a rear wheel output shaft (11; 211; 302) for applying a steering angle associated with a quantity of displacement in the axial direction of the output shaft to rear wheels,
a first electric motor (37a; 237a; 306a),
a first speed reducer (46a, 251a, 320a) placed between the first electric motor and said rear wheel output shaft to displace said rear wheel output shaft in the axial direction when said electric motor is operated,
a second electric motor (37b; 237b; 306b),
a second speed reducer (46b; 251b; 320b) placed between the second electric motor and said rear wheel output shaft to displace said rear wheel output shaft in the axial direction when said second electric motor is operated, and
a control means for controlling said first and second electric motors and allowing said electric motors to displace said rear wheel output shaft in the axial direction,
said rear wheel output shaft being formed as a single shaft,
and the forward transmission efficiency of each speed reducer from the motor to the rear wheel output shaft being higher than its reverse transmission efficiency.

2. Electric four-wheel steering system according to claim 1, **characterized in that** each actuating unit comprises a clutch (40a, 40b; 245a, 245b; 309a, 309b) arranged between the motor (37a, 37b; 237a, 237b; 306a, 306b) and the speed reducer (46a, 46b; 251a, 251b; 320a, 320b).

3. Electric four-wheel steering system according to claim 1 or 2**, characterized by** a front wheel steering angle sensor for detecting a steering angle applied to front wheels and a control means for calculating a steering angle to be applied to rear wheels by using the signal sent from said front wheel steering angle sensor.

4. Electric four-wheel steering system according to one of claims 1 to 3, **characterized by** a battery for supplying power to said actuating units, and supply voltage detecting means for detecting the voltage of the battery and supplying the detected signal to the control (224, 260a, 260b), enabling application of a large steering angle to said rear wheels when said voltage is high, enabling application of a small steering angle to said rear wheels when said voltage is low, and preventing application of a steering angle to said rear wheels when said voltage is very low.

5. Electric four-wheel steering system according to one of claims 1 to 4, **characterized by** sensors (208, 223, 233, 234) for detecting parameters affecting the degree of a steering angle to be applied to rear wheels,
a control means (224) for inputting signals from said sensors (208, 223, 233, 234) and outputting control signals upon which a steering angle is applied to said rear wheels by said actuating unit,
said control means (224) having two control parameter calculating means (235₁, 235₂) in parallel for receiving input signals from said sensors (208, 223, 233, 234) and calculating control signals, and a comparing and selecting means (236) for comparing said control signals sent from said control parameter calculating means (235₁, 235₂), and sending output signals to said actuating unit only when said control signals sent from said control parameter calculating means (235₁, 235₂) have equal values.

6. Electric four-wheel steering system according to one of claims 1 to 5, **characterized in that** the reverse transmission efficiencies are such that a steering angle is applied to said rear wheels only when said actuating units operate to displace the rear wheel output shaft (11) by the same quantity in the same direction.

7. Electric four-wheel steering system according to claim 1 or 2, **characterized by** at least two systems of factor sensors (208, 234, 233) for detecting factors affecting the degree of a steering angle to be applied to rear wheels;
at least three systems of rear wheel steering angle sensors (256a, 256b, 265) for detecting a steering angle applied to said rear wheels;
at least two systems of control means (260a, 260b) parallel to each other, each controlling an actuating unit in response to processed input signals supplied by said sensors via processing circuits (257, 258, 259), for inputting signals on a communication interface circuit (264) arranged between the control means (260a, 260b) for comparing the output signals of said control means (260a, 260b) and detecting disagreement therebetween.

8. Electric four-wheel steering system according to claim 1 or 2, **characterized by** a first unidirectional clutching mechanism (321a) placed between said rear wheel output shaft (302) and a stationary section (327) of the vehicle, and allowing said rear wheel output shaft (302) to move towards the neutral position but hindering said rear wheel output shaft from moving in one direction from the neutral position when said rear wheel output shaft deviates in one direction from the neutral position;
a first cancelling mechanism (322a) for deactivating said first unidirectional clutching mechanism (321a) and allowing said rear wheel output shaft (302) to move freely;
a second unidirectional clutching mechanism (321b) placed between said rear wheel output shaft (302) and said stationary section (327) of the vehicle, and allowing said rear wheel output shaft (302) to move towards the neutral position but hindering said rear wheel output shaft (302) from moving in the other direction from the neutral position when said rear wheel output shaft (302) deviates in the other direction from the neutral position;
a second cancelling mechanism (322b) for deactivating said second unidirectional clutching mechanism (321b) and allowing said rear wheel output shaft (302) to move freely, both unidirectional clutching mechanisms (321a, 321b) being such that the permissible displacement directions are reverse, and
a control means for controlling said actuators and said first and second cancelling mechanisms;
said control means activating said first and second cancelling mechanisms (322a, 322b) during normal operation, so that said first and second unidirectional clutching mechanisms (321a, 321b) will not hinder displacement of said rear wheel output shaft (302), and deactivating said first and second cancelling mechanisms (322a, 322b) when failure occurs, so that said first and second unidirectional clutching mechanisms (321a, 321b) will restrict displacement of said rear wheel output shaft (302).

9. Method for steering the rear wheels of a vehicle by an electric four-wheel steering system according to one of claims 1 to 8, **characterized in that** under normal operation conditions for applying a steering angle to the rear wheels said rear wheel output shaft (302) is displaced from and to neutral position by both actuating units in joint action, both operating synchronously in response to input signals processed by control means (260a, 260b), whereas
in case of failure of one motor (37a, 37b; 237a, 237b; 306a, 306b) the rear wheel output shaft (11; 211; 302) is returned to neutral position by the other functioning actuating unit and is held in neutral position thereby.

10. Method according to claim 9, **characterized in that** the functioning actuating unit returns the rear wheel output shaft (11; 211; 302) to neutral position while a clutch arranged (40a, 40b; 245a, 245b; 309a, 309b) between the deenergised or defective motor (37a, 37b; 237a, 237b; 306a, 306b) and its associated speed reducer (46a, 46b; 251a, 251b; 320a, 320b) is released, separating said deenergised or defective motor from said speed reducer.

11. Method according to claims 9 or 10, **characterized in that** if an abnormal steering angle is likely to be applied to the rear wheel output shaft (11; 211; 302), said rear wheel output shaft is immediately reset to neutral position by at least one actuating unit and locked in that position.

## Patentansprüche

1. Elektrisches Vierradlenksystem mit:
einer Hinterradausgangswelle (11;211;302) zur Beaufschlagung der Hinterräder mit einem Lenkwinkel unter einer Verschiebung der Ausgangswelle in Axialrichtung.
einem ersten Elektromotor (37a;237a;306a),
einer ersten Geschwindigkeitsreduziervorrichtung (46a;251a;320a), die zwischen dem ersten Elektromotor und der Hinterradausgangswelle angeordnet ist, um die Hinterradausgangswelle in Axialrichtung zu verschieben, wenn der Elektromotor betätigt wird,
einem zweiten Elektromotor (37b;237b;306b),
einer zweiten Geschwindigkeitsreduziervorrichtung (46b;251b;320b), die zwischen dem zweiten Elektromotor und der Hinterradausgangswelle angeordnet ist, um die Hinterradausgangswelle in Axialrichtung zu verschieben, wenn der zweite Elektromotor betätigt wird, und
einer Steuervorrichtung zur Steuerung des ersten und zweiten Elektromotors und zur Ermöglichung der Verschiebung der Hinterradausgangswelle in Axialrichtung durch die Elektromotoren,
wobei die Hinterradausgangswelle als eine einzige Welle ausgebildet ist,
und der Getriebewirkungsgrad jeder Geschwindigkeitsreduziervorrichtung in Vorwärtsrichtung vom Motor zu der Hinterradausgangswelle höher ist als der Getriebewirkungsgrad in Umkehrrichtung.

2. Elektrisches Vierradlenksystem nach Anspruch 1, **dadurch gekennzeichnet,** daß jede Betätigungseinheit eine Kupplung (40a,40b;245a,245b;309a,309b) aufweist, die zwischen dem Motor (37a,37b;237a,237b;306a,306b) und der Geschwindigkeitsreduziervorrichtung (46a,46b;251a,251b;320a,320b) angeordnet ist.

3. Elektrisches Vierradlenksystem nach Anspruch 1 oder 2, **gekennzeichnet durch** einen Vorderradlenkwinkelsensor zur Erfassung eines auf die Vorderräder aufgebrachten Lenkwinkels und einer Steuervorrichtung zur Berechnung eines auf die Hinterräder aufzubringenden Lenkwinkels unter Verwendung des Signals des Vorderradlenkwinkelsensors.

4. Elektrisches Vierradlenksystem nach einem der Ansprüche 1 bis 3, **gekennzeichnet durch** eine Batterie zur Energieversorgung der Betätigungseinheiten, und einer Versorgungsspannungserfassungsvorrichtung zur Erfassung der Batteriespannung und zur Übermittlung des erfaßten Signals an die Steuervorrichtung (224;260a,260b), die die Aufbringung eines großen Lenkwinkels auf die Hinterräder ermöglicht, wenn die Spannung hoch ist, die Aufbringung eines kleinen Lenkwinkels auf die Hinterräder ermöglicht, wenn die Spannung niedrig ist, und die Aufbringung eines Lenkwinkels auf die Hinterräder verhindert, wenn die Spannung sehr niedrig ist.

5. Elektrisches Vierradlenksystem nach einem der Ansprüche 1 bis 4, **gekennzeichnet durch** Sensoren (208,223,233,234) zur Erfassung von Einflußgrößen, die die Größe eines auf die Hinterräder aufzubringenden Lenkwinkels beeinflussen,
eine Steuervorrichtung (224) zur Eingabe von Signalen von den Sensoren (208,223,233,234) und zur Ausgabe eines Steuersignals aufgrund dessen durch die Betätigungseinheit ein Lenkwinkel auf die Hinterräder aufgebracht wird,
wobei die Steuervorrichtung (224) zwei Steuergrößenberechnungsvorrichtungen (235₁, 235₂) parallel zueinander aufweist, zum Empfang eines Eingangssignals von den Sensoren (208,223,233,234) und Berechnung eines Steuersignals, und eine Vergleichs- und Auswählvorrichtung (236) zum Vergleichen der von den Steuergrößenberechnungsvorrichtungen (235₁, 235₂) abgegebenen Steuersignale, und zum Senden von Ausgangssignalen zu den Betätigungseinheiten lediglich dann, wenn die von den Steuergrößenberechnungsvorrichtungen (235₁, 235₂) abgegebenen Steuersignale gleiche Werte besitzen.

6. Elektrisches Vierradlenksystem nach einem der Ansprüche 1 bis 5, **dadurch gekennzeichnet,** daß die Getriebewirkungsgrade in Umkehrrichtung so gewählt sind, daß auf die Hinterräder ein Lenkwinkel nur dann aufgebracht wird, wenn die Betätigungseinheiten betätigt werden, um die Hinterradausgangswelle (11) um die die gleiche Länge in die gleiche Richtung zu verschieben.

7. Elektrisches Vierradsteuersystem nach einem der Ansprüche 1 oder 2, **gekennzeichnet durch** zumindest zwei Einflußgrößensensorsysteme (208,234,233) zur Erfassung von Einflußgrößen, die die Größe eines auf die Hinterräder aufzubringenden Lenkwinkels beeinflussen;
mindestens drei Hinterradlenkwinkelerfassungssysteme (256a,256b,265) zur Erfassung eines auf die Hinterräder aufgebrachten Lenkwinkels;
mindestens zwei parallel zueinander angeordnete Steuervorrichtungssysteme (260a,260b), die jeweils eine Betätigungseinheit in Abhängigkeit von verarbeiteten Eingangssignalen, die durch die Sensoren über Verarbeitungsschaltungen (257,258,259) zugeführt werden, steuern, zur Eingabe von Signalen in ein zwischen den Steuervorrichtungen (260a,260b) angeordnetes Kommunikationsinterface (264) zum Vergleichen der Ausgangssignale der Steuervorrichtungen (260a,260b) und zur Erfassung einer Abweichung zwischen diesen.

8. Elektrisches Vierradlenksystem nach einem der Ansprüche 1 oder 2, **gekennzeichnet durch** einen ersten Ein-Richtungskopplungsmechanismus (321a), der zwischen der Hinterradausgangswelle (302) und einem stationären Teil (327) des Fahrzeuges angeordnet ist und eine Bewegung der Hinterradausgangswelle (302) in die Neutralstellung ermöglicht, jedoch ein Bewegen der Hinterradausgangswelle in einer Richtung aus der Neutralstellung heraus verhindert, wenn die Hinterradausgangswelle in einer Richtung von der Neutralstellung abweicht;
einen ersten Aufhebungsmechanismus (322) zur Deaktivierung des ersten Ein-Richtungskopplungsmechanismus (321a) zur Ermöglichung einer freien Bewegung der Hinterradausgangswelle (302);
einen zweiten Ein-Richtungskopplungsmechanismus (321b), der zwischen der Hinterradausgangswelle (302) und einem stationären Teil (327) des Fahrzeuges angeordnet ist und eine Bewegung der Hinterradausgangswelle (302) in Richtung der Neutralstellung ermöglicht, jedoch ein Bewegen der Hinterradausgangswelle (302) in die andere Richtung aus der Neutralstellung verhindert, wenn die Hinterradausgangswelle (302) in der anderen Richtung von der Neutralstellung abweicht;
einen zweiten Aufhebungsmechanismus (322b) zur Deaktivierung des zweiten Ein-Richtungskoppelmechanismus (321b) zur Ermöglichung einer freien Bewegung der Hinterradausgangswelle (302), wobei die zulässigen Verschiebungsrichtungen der beiden Ein-Richtungskopplungsmechanismen (321a,321b) umgekehrt zueinander sind, und
eine Steuervorrichtung zur Steuerung der Betätigungsvorrichtungen und der ersten und zweiten Aufhebungsmechanismen;
wobei die Steuervorrichtung den ersten und zweiten Aufhebungsmechanismus (322a,322b) während des Normalbetriebes aktiviert, so daß der erste und zweite Ein-Richtungskopplungsmechanismus (321a,321b) eine Verschiebung der Hinterradausgangswelle (302) nicht behindert und im Falle einer Störung den ersten und zweiten Aufhebungsmechanismus (322a,322b) deaktiviert, so daß der erste und zweite Ein-Richtungskopplungsmechanismus (321a,321b) die Verschiebung der Hinterradausgangswelle (302) beschränkt.

9. Verfahren zum Lenken der Hinterräder eines Fahrzeuges durch ein elektrisches Vierradlenksystem nach einem der Ansprüche 1 bis 8, **dadurch gekennzeichnet,** daß unter normalen Betriebsbedingungen zur Aufbringung eines Lenkwinkels auf die Hinterräder die Hinterradausgangswelle (302) durch beide Betätigungseinheiten gemeinsam in die Neutralstellung und aus dieser hinaus verschoben wird, wobei beide Betätigungseinheiten in Abhängigkeit von durch die Steuervorrichtung (260a,260b) verarbeiteten Eingangssignalen synchron arbeiten, wogegen
im Störungsfall eines Motors (37a,37b;237a,237b;306a,306b) die Hinterradausgangswelle (11;211;302) durch die andere, funktionierende Betätigungseinheit in die Neutralstellung zurückgebracht und durch diese in der Neutralstellung gehalten wird.

10. Verfahren nach Anspruch 9**, dadurch gekennzeichnet,** daß die funktionierende Betätigungseinheit die Hinterradausgangswelle (11;211;302) in die Neutralstellung zurückbringt, während eine Kupplung (40a,40b;245a,245b;309a,309b), die zwischen dem abgeschalteten bzw. dem defekten Motor (37a,37b;237a,237b;306a,306b) und seiner Geschwindigkeitsreduziervorrichtung (46a,46b;251a,251b;320a,320b) angeordnet ist, freigegeben wird, wodurch der abgeschaltete bzw. defekte Motor von der Geschwindigkeitsreduziervorrichtung getrennt wird.

11. Verfahren nach einem der Ansprüche 9 oder 10, **dadurch gekennzeichnet,** daß dann, wenn die Gefahr besteht, daß auf die Hinterradausgangswelle (11;211;302) ein abnormaler Lenkwinkel aufgebracht wird, die Hinterradausgangswelle durch zumindest eine Betätigungseinheit sofort in die Neutralstellung zurückgebracht und in dieser verriegelt wird.

## Revendications

1. Système électrique de direction de quatre roues comprenant:
un arbre de sortie (11; 211; 302) de roue arrière pour appliquer un angle de direction associé à une quantité de déplacement dans la direction axiale de l'arbre de sortie, aux roues arrière,
un premier moteur électrique (37a; 237a; 306a),
un premier réducteur (46a, 251a, 320a) de vitesse, placé entre le premier moteur électrique et ledit arbre de sortie de roue arrière, pour déplacer ledit arbre de sortie de roue arrière dans la direction axiale lorsque ledit moteur électrique est actionné,
un second moteur électrique (37b; 237b; 306b),
un second réducteur (46b; 251b; 320b) de vitesse, placé entre le second moteur électrique et ledit arbre de sortie de roue arrière, pour déplacer ledit arbre de sortie de roue arrière dans la direction axiale lorsque ledit second moteur électrique est actionné, et
des moyens de commande pour commander lesdits premier et second moteurs électriques et permettre auxdits moteurs électriques de déplacer ledit arbre de sortie de roue arrière dans la direction axiale,
ledit arbre de sortie de roue arrière étant conformé comme un seul arbre,
et l'efficacité de transmission en marche avant de chaque réducteur de vitesse, entre le moteur et l'arbre de sortie de roue arrière, étant supérieure à son efficacité de transmission en marche arrière.

2. Système électrique de direction de quatre roues selon la revendication 1, **caractérisé en ce que** chaque unité d'actionnement comprend un embrayage (40a, 40b; 245a, 245b; 309a, 309b) disposé entre le moteur (37a, 37b; 237a, 237b; 306a, 306b) et le réducteur de vitesse (46a, 46b; 251a, 251b; 320a, 320b).

3. Système électrique de direction de quatre roues selon la revendication 1 ou 2, **caractérisé par** un détecteur d'angle de direction de roue avant pour détecter l'angle de direction appliqué aux roues avant et un moyen de commande pour calculer l'angle de direction à appliquer aux roues arrière en utilisant le signal envoyé par ledit détecteur d'angle de direction de roue avant.

4. Système électrique de direction de quatre roues selon l'une des revendications 1 à 3, **caractérisé par** une batterie pour alimenter lesdites unités d'actionnement, et un moyen de détection de tension d'alimentation pour détecter la tension de la batterie et appliquer le signal détecté à la commande (224, 260a, 260b), permettant l'application d'un grand angle de direction auxdites roues arrière lorsque ladite tension est élevée, permettant l'application d'un petit angle de direction auxdites roues arrière lorsque ladite tension est faible, et empêchant l'application d'un angle de direction auxdites roues arrière lorsque ladite tension est très faible.

5. Système électrique de direction de quatre roues selon l'une des revendications 1 à 4, **caractérisé par** des détecteurs (208, 223, 233, 234) pour détecter des paramètres affectant le degré de l'angle de direction à appliquer aux roues arrière,
un moyen de commande (224) pour introduire des signaux en provenance desdits détecteurs (208, 223, 233, 234) et délivrer des signaux de commande, à la suite de quoi un angle de direction est appliqué auxdites roues arrière par ladite unité d'actionnement,
ledit moyen de commande (224) comportant deux moyens de calcul (235₁, 235₂) de paramètre de commande, en parallèle, pour recevoir des signaux d'entrée en provenance desdits détecteurs (208, 223, 233, 234) et calculer des signaux de commande, et un moyen (236) de comparaison et de sélection pour comparer lesdits signaux de commande envoyés par le moyen de calcul (235₁, 235₂) de paramètre de commande, et envoyer des signaux de sortie à ladite unité d'actionnement, uniquement lorsque lesdits signaux de commande envoyés par ledit moyen de calcul (235₁, 235₂) de paramètre de commande ont des valeurs égales.

6. Système électrique de direction de quatre roues selon l'une des revendications 1 à 5, **caractérisé en ce que** les efficacités de transmission en marche arrière sont telles qu'un angle de direction est appliqué auxdites roues arrière uniquement lorsque lesdites unités d'actionnement fonctionnent pour déplacer l'arbre de sortie (11) de roue arrière de la même distance dans la même direction.

7. Système électrique de direction de quatre roues selon la revendication 1 ou 2, **caractérisé par** au moins deux systèmes de détecteurs (208, 234, 233) de facteurs, pour détecter les facteurs affectant le degré de l'angle de direction à appliquer aux roues arrière;
au moins trois systèmes de détecteurs (256a, 256b, 265) d'angle de direction de roue arrière, pour détecter l'angle de direction appliqué auxdites roues arrière;
au moins deux systèmes de moyens de commande (260a, 260b) parallèles les uns aux autres, commandant chacun une unité d'actionnement en réponse à des signaux d'entrée traités, appliqués par lesdits détecteurs par l'intermédiaire de circuits de traitement (257, 258, 259), pour introduire des signaux dans un circuit (264) d'interface de communication disposé entre les moyens de commande (260a, 260b), afin de comparer les signaux de sortie desdits moyens de commande (260a, 260b) et de détecter une différence entre eux.

8. Système électrique de direction de quatre roues selon la revendication 1 ou 2, **caractérisé par** un premier mécanisme d'embrayage unidirectionnel (321a) placé entre ledit arbre de sortie (302) de roue arrière et une section fixe (327) du véhicule, et permettant audit arbre de sortie (302) de roue arrière de se déplacer vers la position neutre, mais empêchant ledit arbre de sortie de roue arrière de se déplacer dans une certaine direction à partir de la position neutre lorsque ledit arbre de sortie de roue arrière dévie dans une certaine direction à partir de la position neutre;
un premier mécanisme d'annulation (322a) pour désactiver ledit premier mécanisme d'embrayage unidirectionnel (321a) et permettant audit arbre de sortie (302) de roue arrière de se déplacer librement;
un second mécanisme d'embrayage unidirectionnel (321b) placé entre ledit arbre de sortie (302) de roue arrière et ladite section fixe (327) du véhicule, et permettant audit arbre de sortie (302) de roue arrière de se déplacer vers la position neutre, mais empêchant ledit arbre de sortie (302) de roue arrière de se déplacer dans l'autre direction à partir de la position neutre lorsque ledit arbre de sortie (302) de roue arrière dévie dans l'autre direction à partir de la position neutre;
un second mécanisme d'annulation (322b) pour désactiver ledit second mécanisme d'embrayage unidirectionnel (321b) et permettant audit arbre de sortie (302) de roue arrière de se déplacer librement, les deux mécanismes d'embrayage unidirectionnel (321a, 321b) étant tels que les directions de déplacement permises sont inverses, et
un moyen de commande pour commander lesdits dispositifs d'actionnement et lesdits premier et second mécanismes d'annulation;
lesdits moyens de commande activant lesdits premier et second mécanismes d'annulation (322a, 322b) au cours du fonctionnement normal, de telle sorte que lesdits premier et second mécanismes d'embrayage unidirectionnel (321a, 321b) n'empêchent pas le déplacement dudit arbre de sortie (302) de roue arrière, et désactivant lesdits premier et second mécanismes d'annulation (322a, 322b) lorsqu'une panne se produit, de telle sorte que lesdits premier et second mécanismes d'embrayage unidirectionnel (321a, 321b) limitent le déplacement dudit arbre de sortie (302) de roue arrière.

9. Procédé de direction des roues arrière d'un véhicule par un système électrique de direction de quatre roues selon l'une des revendications 1 à 8, **caractérisé en ce que**, dans des conditions normales de fonctionnement, pour appliquer un angle de direction aux roues arrière, ledit arbre de sortie (302) de roue arrière est déplacé à partir de la position neutre et vers celle-ci, par une action jointe des deux unités d'actionnement, fonctionnant toutes deux de manière synchrone en réponse à des signaux d'entrée traités par des moyens de commande (260a, 260b), tandis que
dans le cas d'une panne d'un moteur (37a, 37b; 237a, 237b; 306a, 306b), l'arbre de sortie (11; 211; 302) de roue arrière est renvoyé à la position neutre par l'autre unité d'actionnement en fonctionnement et est maintenu à la position neutre par celle-ci.

10. Procédé selon la revendication 9, **caractérisé en ce que** l'unité d'actionnement en fonctionnement renvoie l'arbre de sortie (11; 211; 302) de roue arrière à la position neutre bien qu'un embrayage (40a, 40b; 245a, 245b; 309a, 309b) disposé entre le moteur désexcité ou défectueux (37a, 37b; 237a, 237b; 306a, 306b) et son réducteur (46a, 46b; 251a, 251b; 320a, 320b) de vitesse associé soit libéré, séparant ledit moteur désexcité ou défectueux dudit réducteur de vitesse.

11. Procédé selon les revendications 9 ou 10, **caractérisé en ce que**, si un angle de direction anormal est susceptible d'être appliqué à l'arbre de sortie (11; 211; 302) de roue arrière, ledit arbre de sortie de roue arrière est immédiatement remis à la position neutre par au moins une unité d'actionnement et est verrouillé dans cette position.
